# EUROPEAN PATENT SPECIFICATION

(11) **EP 4 765 038 B1**
(45) Date of publication and mention of the grant of the patent: **14.10.2026**
(21) Application number: 25226320.7
(22) Date of filing: 22.12.2025
(51) Int. Cl.: G06V 10/764, G06V 10/82, G06V 20/17, G06V 20/10, G06V 20/64

(54) **SYSTEM AND METHOD FOR TREE INVENTORY**
SYSTEM UND VERFAHREN FÜR BAUMBESTAND
SYSTÈME ET PROCÉDÉ D'INVENTAIRE D'ARBRE

(30) Priority: 23.12.2024 US 202463738162 P
(43) Date of publication of application: 24.06.2026
(73) Proprietor: Xeos Imaging Inc., Québec, QC G1P 4P5 (CA)
(72) Inventor: NGUYEN, Van Tho, Québec, QC G1P 4P5 (CA); ST-PIERRE, Tony, Québec, QC G1P 4P5 (CA); ROUBY, Maxime, 86000 Poitiers (FR); BONHOMME, Valentin, 63000 Clermont-Ferrand (FR)
(74) Representative: Bandpay & Greuter

(56) References cited:
- XIANG BINBIN ET AL: "Automated forest inventory: Analysis of high-density airborne LiDAR point clouds with 3D deep learning", REMOTE SENSING OF ENVIRONMENT. ELSEVIER., XX, vol. 305, 27 February 2024 (2024-02-27), XP087491281, ISSN: 0034-4257, [retrieved on 20240227], DOI: 10.1016/J.RSE.2024.114078
- STEFANO PULITI ET AL: "FOR-instance: a UAV laser scanning benchmark dataset for semantic and instance segmentation of individual trees", ARXIV.ORG CORNELL UNIVERSITY LIBRARY, 201 OLIN LIBRARY CORNELL UNIVERSITY ITHACA, NY 14853, 3 September 2023 (2023-09-03), XP091605623

## Description

### TECHNICAL FIELD

The technical field relates to tree inventories, and more specifically to systems and methods for predicting the species of trees based on airborne LiDAR.

### BACKGROUND

Creating a tree inventory by delineating trees and obtaining information such as their species is a prerequisite for forest resource management. Airborne LiDAR and photogrammetry can be used to perform this task. Doing the same in urban environments also provide important data to inform urban planning decisions.

On the other hand, it is time consuming, and there is a strong incentive to automatizing this task. Supervised machine learning, in particular deep neural networks can be used to identify tree species, although the acquisition and annotation of sufficient training data are extremely costly. Additionally, before they can be inputted in the neural networks, trees must be delineated from LiDAR and/or photogrammetry data. In addition, the superimposition of LiDAR and photogrammetry data is a challenge caused by the leaning effect in orthomosaic photos.

Existing approaches are directed mostly to detecting tree species from pre-segmented LiDAR data and photographs. Some existing approaches use hierarchical region merging (HRM) to perform segmentation, which can involve manual verification and correction. Moreover, existing approaches have been tested in some simple cases in temperate forests, and would not easily be adaptable for use in urban environments, where trees are less homogeneous in terms of species, crown form, age and modification. Furthermore, existing approaches are incapable of adapting to the special case of overtopped trees, for which less or no information is available in aerial images. Therefore, overtopped trees are not or incorrectly delineated, and thus are not or incorrectly classified. There remains a need for systems and methods that are able to segment and generate tree information entirely automatically, in both forest and urban environments, including for overtopped trees, and without requiring an excessive amount of training data.

### SUMMARY

In accordance with an aspect, a method for generating an inventory of trees in a target area is provided. The method includes obtaining a LiDAR point cloud acquired by an airborne LiDAR scanner and at least one aerial image of the target area, generating a digital terrain model based on the LiDAR point cloud, performing a semantic segmentation by segmenting the LiDAR point cloud into a segmented LiDAR point cloud, the segmented LiDAR point cloud assigning one of a plurality of classes to at least a subset of LiDAR points of the LiDAR point cloud, the classes comprising at least a vegetation class, performing a panoptic segmentation by segmenting the segmented LiDAR point cloud to assign one of a plurality of panoptic segmentation classes to at least a subset of panoptic segmented LiDAR points of the LiDAR point cloud, the panoptic segmentation classes comprising at least a tree class and a low vegetation class, and assign an instance identifier to each LiDAR point of the LiDAR point cloud of the tree class, thereby delineating a plurality of trees, each tree of the plurality of trees being associated with a respective tree point cloud corresponding to a subset of the segmented LiDAR point cloud, and populating the inventory of trees with the plurality of trees. For each respective tree of the plurality of trees, the method further includes projecting the respective tree point cloud to the digital terrain model, providing the projected tree point cloud as input to a first encoder trained to accept as input a set of LiDAR points corresponding to a single tree and generate as output a vectorial embedding of the set of LiDAR points corresponding to the single tree, determining a crown class of the respective tree based on the projected tree point cloud, the crown class belonging to a set of possible crown classes comprising at least a dominant crown class and an overtopped crown class, responsive to the crown class corresponding to a dominant crown class generating a cropped image from the at least one aerial image of the target area based on the projected tree point cloud and providing the cropped image as input to a second encoder trained to accept as input a tree image and generate as output a vectorial embedding of the tree image, defining a classifier input vector as-if the crown class corresponds to a dominant crown class-an aggregation of the vectorial embedding of the set of LiDAR points corresponding to the single tree and the vectorial embedding of the tree image, or otherwise, the vectorial embedding of the set of LiDAR points corresponding to the single tree, providing the classifier input vector as input to a classifier trained to accept as input a vector and generate as output a predicted tree species, and updating the inventory of trees with the predicted tree species. The panoptic segmentation is performed without a canopy height model, thereby allowing delineation of overtopped trees, the panoptic segmentation includes a backbone neural network trained using a dataset augmented with synthetic tree formations generated by randomly combining and arranging ground truth tree instances, the first encoder and a first temporary classifier taking the output of the first encoder as input and generating a predicted first species are trained using a first dataset comprising training sets of LiDAR points, each training set of LiDAR point being labelled with a first ground truth species, the first temporary classifier being discarded after training, the second encoder and a second temporary classifier taking the output of the second encoder as input and generating a predicted second species are trained using a second dataset comprising aerial tree images, each aerial tree image being labelled with a second ground truth species, the second temporary classifier being discarded after training, and the classifier is trained using the intersection of the first dataset and the second dataset.

In accordance with another aspect, a method for generating an inventory of trees in a target area is provided. The method includes obtaining a LiDAR point cloud acquired by an airborne optical transceiver and at least one aerial image of the target area, generating a digital terrain model based on the LiDAR point cloud, segmenting the LiDAR point cloud to delineate a plurality of trees, each tree of the plurality of trees being associated with a respective tree point cloud corresponding to a subset of the segmented LiDAR point cloud, the segmentation being performed without a canopy height model, thereby allowing delineation of overtopped trees, and populating the inventory of trees with the plurality of trees. For each respective tree of the plurality of trees, the method further includes projecting the respective tree point cloud to the digital terrain model, determining a crown class of the respective tree based on the projected tree point cloud, the crown class belonging to a set of possible crown classes comprising at least a dominant crown class and an overtopped crown class, if the crown class corresponds to a dominant crown class generating a cropped image from the at least one aerial image of the target area based on the projected tree point cloud and providing the tree point cloud and the cropped image as input to a first classifier trained to accept as input a set of LiDAR points corresponding to a single tree and a tree image and to generate as output a predicted tree species, or otherwise providing the tree point cloud as input to a second classifier trained to accept as input the set of LiDAR points corresponding to a single tree and to generate as output the predicted tree species, and updating the inventory of trees with the predicted tree species.

In accordance with a further aspect, a system for generating an inventory of trees in a target area is provided. The system includes at least one aerial vehicle comprising a LiDAR scanner configured to acquire a LiDAR point cloud and a camera configured to acquire at least one aerial image of the target area, a digital terrain model generator configured to generate a digital terrain model based on the LiDAR point cloud, a LiDAR data segmentation module configured to perform a semantic segmentation by segmenting the LiDAR point cloud into a segmented LiDAR point cloud, the segmented LiDAR point cloud assigning one of a plurality of classes to at least a subset of LiDAR points of the LiDAR point cloud, the classes comprising at least a vegetation class, a panoptic segmentation module configured to perform a panoptic segmentation by assigning one of a plurality of panoptic segmentation classes to at least a subset of panoptic segmented LiDAR points of the LiDAR point cloud, the panoptic segmentation classes comprising at least a tree class and a low vegetation class, and assigning an instance identifier to each LiDAR point of the LiDAR point cloud of the tree class, thereby delineating a plurality of trees, each tree of the plurality of trees being associated with a respective tree point cloud corresponding to a subset of the segmented LiDAR point cloud, a tree point cloud distorter configured, for each respective tree of the plurality of trees, to project the respective tree point cloud to the digital terrain model, a crown classifier configured, for each respective tree of the plurality of trees, to determine a crown class of the respective tree based on the projected tree point cloud, the crown class belonging to a set of possible crown classes comprising at least a dominant crown class and an overtopped crown class, an image cropper configured, for each respective tree of the plurality of trees belonging to the dominant crown class, to generate a cropped image from the at least one aerial image of the target area based on the projected tree point cloud, and a species classification module configured to update the inventory of trees with the predicted tree species. The species classification module includes a LiDAR encoder trained, for each respective tree of the plurality of trees, to accept as input the projected tree point cloud and to generate as output a vectorial embedding of the set of LiDAR points corresponding to the tree, an image encoder trained, for each respective tree of the plurality of trees belonging to the dominant crown class, to accept the cropped image as input and to generate as output a vectorial embedding of the tree image, and a classifier trained, for each respective tree of the plurality of trees, to accept as input a classifier input vector and generate as output a predicted tree species, the classifier input vector being defined as-if the crown class corresponds to a dominant crown class-an aggregation of the vectorial embedding of the set of LiDAR points corresponding to the tree and the vectorial embedding of the tree image, or otherwise the vectorial embedding of the set of LiDAR points corresponding to the tree. The panoptic segmentation module is configured to perform the panoptic segmentation without a canopy height model, thereby allowing delineation of overtopped trees, the panoptic segmentation module comprises a backbone neural network trained using a dataset augmented with synthetic tree formations generated by randomly combining and arranging ground truth tree instances, the LiDAR encoder and a first temporary classifier taking the output of the first encoder as input and generating a predicted first species are trained using a first dataset comprising training sets of LiDAR points, each training set of LiDAR point being labelled with a first ground truth species, the first temporary classifier being discarded after training, the image encoder and a second temporary classifier taking the output of the second encoder as input and generating a predicted second species are trained using a second dataset comprising aerial tree images, each aerial tree image being labelled with a second ground truth species, the second temporary classifier being discarded after training, and the classifier is trained using the intersection of the first dataset and the second dataset.

In accordance with yet another aspect, a computer program product for generating an inventory of trees in a target area is provided. The computer program product includes a computer readable memory storing computer executable instructions thereon that when executed by a computer perform the steps of one of the methods described above.

In accordance with yet a further aspect, a method for generating an inventory of trees in a target area is provided. The method includes obtaining a LiDAR point cloud acquired by an airborne LiDAR scanner; generating a digital terrain model based on the LiDAR point cloud; performing a semantic segmentation by segmenting the LiDAR point cloud into a segmented LiDAR point cloud, the segmented LiDAR point cloud assigning one of a plurality of classes to at least a subset of LiDAR points of the LiDAR point cloud, the classes comprising at least a vegetation class; performing a panoptic segmentation by segmenting the segmented LiDAR point cloud to: assign one of a plurality of panoptic segmentation classes to at least a subset of panoptic segmented LiDAR points of the LiDAR point cloud, the panoptic segmentation classes comprising at least a tree class and a low vegetation class, and assign an instance identifier to each LiDAR point of the LiDAR point cloud of the tree class, thereby delineating a plurality of trees, each tree of the plurality of trees being associated with a respective tree point cloud corresponding to a subset of the segmented LiDAR point cloud; populating the inventory of trees with the plurality of trees; and for each respective tree of the plurality of trees: projecting the respective tree point cloud to the digital terrain model, providing the projected tree point cloud as input to a first encoder trained to accept as input a set of LiDAR points corresponding to a single tree and generate as output a vectorial embedding of the set of LiDAR points corresponding to the single tree, defining a classifier input vector based at least on the vectorial embedding of the set of LiDAR points corresponding to the single tree, providing the classifier input vector as input to a classifier trained to accept as input a vector and generate as output a predicted tree species, and updating the inventory of trees with the predicted tree species.

In some embodiments, the method includes the step of acquiring the point cloud by an aerial vehicle equipped with the LiDAR scanner, the LiDAR scanner comprising at least a transmitter configured to send a laser beam towards an object and a receiver configured to detect a reflection of the laser beam on the object, the LiDAR scanner configured to create point data based on the reflection of the beam, the point data corresponding to the LiDAR point cloud.

In some embodiments, the point data comprise, for each of a plurality of points, at least one of: coordinates, a return number, a number of returns, an intensity and a scan angle.

In some embodiments, the panoptic segmentation includes a backbone neural network.

In some embodiments, the backbone neural network is trained using a dataset augmented with synthetic tree formations generated by randomly combining and arranging ground truth tree instances.

In some embodiments, the backbone neural network is a Point Transformer.

In some embodiments, the panoptic segmentation is performed without a canopy height model, thereby allowing delineation of overtopped trees.

In some embodiments, the method includes obtaining at least one aerial image of the target area.

In some embodiments, the method includes determining a crown class of the respective tree based on the projected tree point cloud, the crown class belonging to a set of possible crown classes comprising at least a dominant crown class and an overtopped crown class and, responsive to the crown class corresponding to a dominant crown class: generating a cropped image from the at least one aerial image of the target area based on the projected tree point cloud; providing the cropped image as input to a second encoder trained to accept as input a tree image and generate as output a vectorial embedding of the tree image; and defining the classifier input vector based on an aggregation of the vectorial embedding of the set of LiDAR points corresponding to the single tree and the vectorial embedding of the tree image.

In some embodiments, the first encoder and a first temporary classifier block taking the output of the first encoder as input and generating a predicted first species are trained using a first dataset comprising training sets of LiDAR points, each training set of LiDAR point being labelled with a first ground truth species, the first temporary classifier block being discarded after training, the second encoder and a second temporary classifier block taking the output of the second encoder as input and generating a predicted second species are trained using a second dataset comprising aerial tree images, each aerial tree image being labelled with a second ground truth species, the second temporary classifier block being discarded after training, and the classifier block is trained using an intersection of the first dataset and the second dataset.

In accordance with yet another aspect, a system for generating an inventory of trees in a target area is provided. The system includes at least one aerial vehicle comprising a LiDAR scanner configured to acquire a LiDAR point cloud; a digital terrain model generator configured to generate a digital terrain model based on the LiDAR point cloud; a LiDAR data segmentation module configured to perform a semantic segmentation by segmenting the LiDAR point cloud into a segmented LiDAR point cloud, the segmented LiDAR point cloud assigning one of a plurality of classes to at least a subset of LiDAR points of the LiDAR point cloud, the classes comprising at least a vegetation class; a panoptic segmentation module configured to perform a panoptic segmentation by: assigning one of a plurality of panoptic segmentation classes to at least a subset of panoptic segmented LiDAR points of the LiDAR point cloud, the panoptic segmentation classes comprising at least a tree class and a low vegetation class, and assigning an instance identifier to each LiDAR point of the LiDAR point cloud of the tree class, thereby delineating a plurality of trees, each tree of the plurality of trees being associated with a respective tree point cloud corresponding to a subset of the segmented LiDAR point cloud; a tree point cloud distorter configured, for each respective tree of the plurality of trees, to project the respective tree point cloud to the digital terrain model; and a species classification module configured to update the inventory of trees with a predicted tree species, the species classification module comprising: a LiDAR encoder trained, for each respective single tree of the plurality of trees, to accept as input the projected tree point cloud and to generate as output a vectorial embedding of the set of LiDAR points corresponding to the single tree, and a classifier trained to accept as input a classifier input vector and generate as output the predicted tree species, the classifier input vector being defined based at least on the vectorial embedding of the set of LiDAR points corresponding to the single tree.

In some embodiments, the point cloud comprises, for each of a plurality of points, at least one of: coordinates, a return number, a number of returns, an intensity and a scan angle.

In some embodiments, the panoptic segmentation module includes a backbone neural network.

In some embodiments, the backbone neural network is trained using a dataset augmented with synthetic tree formations generated by randomly combining and arranging ground truth tree instances.

In some embodiments, the backbone neural network is a Point Transformer.

In some embodiments, the panoptic segmentation module is configured to perform panoptic segmentation without a canopy height model, thereby allowing delineation of overtopped trees.

In some embodiments, each of the at least one aerial vehicle further comprises a camera configured to acquire at least one aerial image of the target area.

In some embodiments, the system includes a crown classifier configured, for each respective tree of the plurality of trees, to determine a crown class of the respective tree based on the projected tree point cloud, the crown class belonging to a set of possible crown classes comprising at least a dominant crown class and an overtopped crown class; and an image cropper configured, for each respective tree of the plurality of trees belonging to the dominant crown class, to generate a cropped image from the at least one aerial image of the target area based on the projected tree point cloud, wherein the species classification module further comprises an image encoder trained, for each respective tree of the plurality of trees belonging to the dominant crown class, to accept the cropped image as input and to generate as output a vectorial embedding of the tree image, and wherein, responsive to the crown class corresponding to a dominant crown class, the classifier input vector is defined based on an aggregation of the vectorial embedding of the set of LiDAR points corresponding to the single tree and the vectorial embedding of the tree image.

In some embodiments, the first encoder and a first temporary classifier block taking the output of the first encoder as input and generating a predicted first species are trained using a first dataset comprising training sets of LiDAR points, each training set of LiDAR point being labelled with a first ground truth species, the first temporary classifier block being discarded after training, the second encoder and a second temporary classifier block taking the output of the second encoder as input and generating a predicted second species are trained using a second dataset comprising aerial tree images, each aerial tree image being labelled with a second ground truth species, the second temporary classifier block being discarded after training, and the classifier block is trained using an intersection of the first dataset and the second dataset.

In accordance with yet a further aspect, a non-transitory computer-readable medium having instructions stored thereon for generating an inventory of trees in a target area is provided. The instructions, when executed by one or more processors, cause the one or more processors to obtain a LiDAR point cloud acquired by an airborne LiDAR scanner; generate a digital terrain model based on the LiDAR point cloud; perform a semantic segmentation by segmenting the LiDAR point cloud into a segmented LiDAR point cloud, the segmented LiDAR point cloud assigning one of a plurality of classes to at least a subset of LiDAR points of the LiDAR point cloud, the classes comprising at least a vegetation class; perform a panoptic segmentation by segmenting the segmented LiDAR point cloud to: assign one of a plurality of panoptic segmentation classes to at least a subset of panoptic segmented LiDAR points of the LiDAR point cloud, the panoptic segmentation classes comprising at least a tree class and a low vegetation class, and assign an instance identifier to each LiDAR point of the LiDAR point cloud of the tree class, thereby delineating a plurality of trees, each tree of the plurality of trees being associated with a respective tree point cloud corresponding to a subset of the segmented LiDAR point cloud; populate the inventory of trees with the plurality of trees; and for each respective tree of the plurality of trees: project the respective tree point cloud to the digital terrain model, provide the projected tree point cloud as input to a first encoder trained to accept as input a set of LiDAR points corresponding to a single tree and generate as output a vectorial embedding of the set of LiDAR points corresponding to the single tree, define a classifier input vector based at least on the vectorial embedding of the set of LiDAR points corresponding to the single tree, provide the classifier input vector as input to a classifier trained to accept as input a vector and generate as output a predicted tree species, and update the inventory of trees with the predicted tree species.

### BRIEF DESCRIPTION OF THE DRAWINGS

For a better understanding of the embodiments described herein and to show more clearly how they may be carried into effect, reference will now be made, by way of example only, to the accompanying drawings which show at least one exemplary embodiment.
Figures 1A and 1B are a schematic of a system for generating an inventory of trees in a target area in accordance with an embodiment.
Figure 2 is a flowchart of a method for generating an inventory of trees in a target area in accordance with an embodiment.
Figure 3A in an illustration of a visual representation of LiDAR intensity data in accordance with an example.
Figures 3B to 3D are illustrations of a LiDAR point cloud at various stages of segmentation in accordance with an example and an embodiment.
Figure 3E in an illustration of a map representation of a tree inventory in accordance with an example and an embodiment.

### DETAILED DESCRIPTION

It will be appreciated that, for simplicity and clarity of illustration, where considered appropriate, reference numerals may be repeated among the figures to indicate corresponding or analogous elements or steps. In addition, numerous specific details are set forth in order to provide a thorough understanding of the exemplary embodiments described herein. However, it will be understood by those of ordinary skill in the art that the embodiments described herein may be practised without these specific details. In other instances, well-known methods, procedures and components have not been described in detail so as not to obscure the embodiments described herein. Furthermore, this description is not to be considered as limiting the scope of the embodiments described herein in any way but rather as merely describing the implementation of the various embodiments described herein.

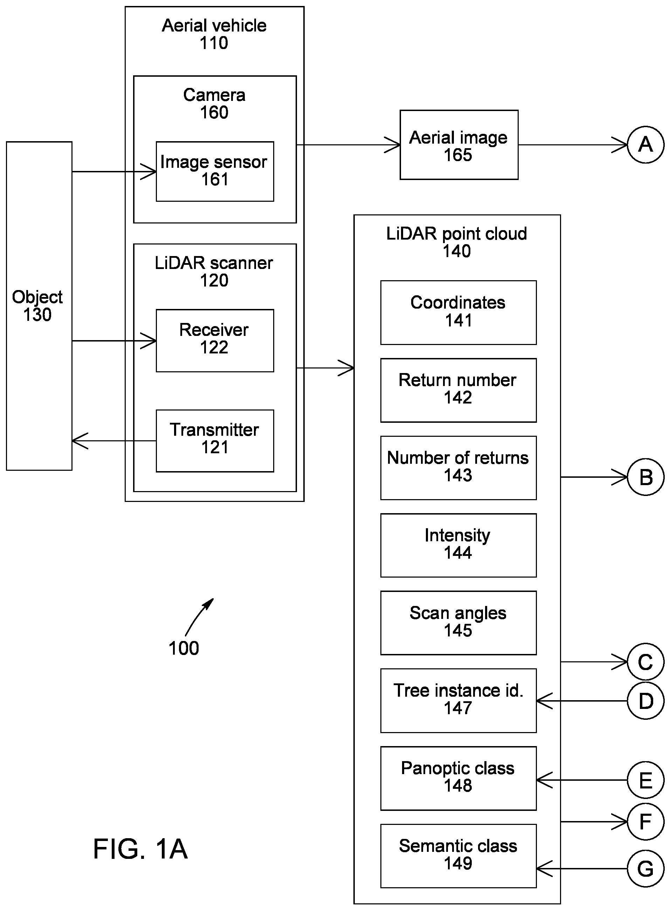

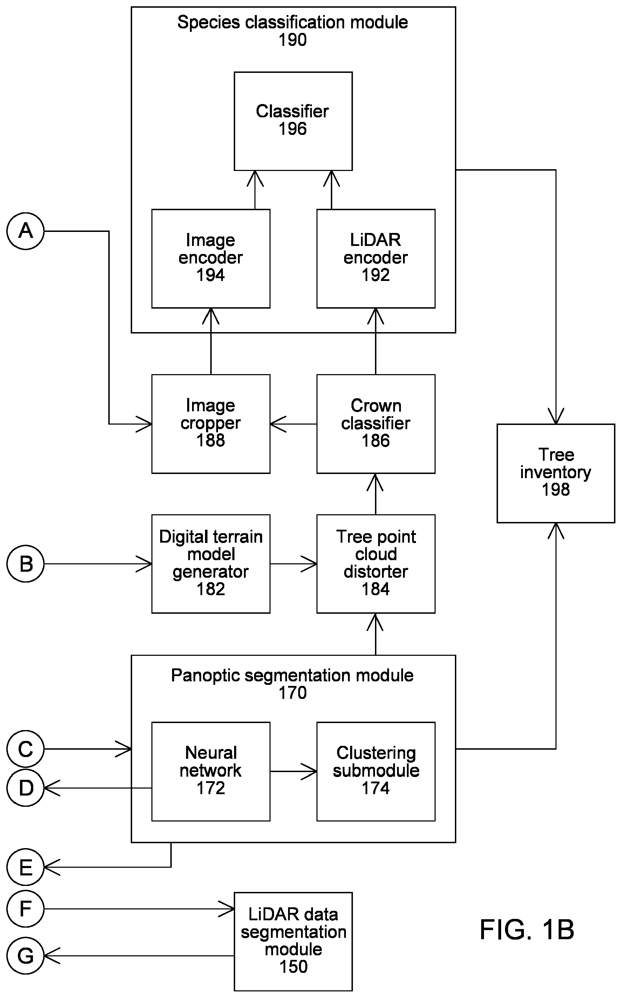

With reference to figures 1A and 1B, an exemplary system 100 for generating an inventory of trees in a target area is provided. Broadly described, the system 100 includes at least one aerial vehicle 110 equipped with a LiDAR scanner 120 used to detect the surface of objects 130 and optionally a camera 160 used to capture an image of the same objects 130. A point cloud 140 and optionally an serial image 165 are created and are passed to one or more segmentation modules 150, 170 and to a species classification module 190 to generate tree inventory 198.

In exemplary system 100, the surveying can be performed by collection vehicles such as aerial vehicles 110, i.e. vehicles equipped with sensing equipment. In some embodiments, the collection vehicles are airborne, and can include manned and/or unmanned aerial vehicles, such as airplanes and drones, and/or spatial vehicles, such as satellites.

Each aerial vehicle 110 can be equipped with one or more sensors, including for instance active optical sensors such as optical transceivers, e.g., LiDAR scanners 120 and/or image sensors 161 used in cameras 160. For instance, in airborne collection vehicles, one or more optical transceivers 120 and/or cameras 160 can be mounted on an underside surface of the vehicle 110, such that it is directed substantially towards the ground. Each aerial vehicle 110 and/or each sensing apparatus 120, 160 mounted thereon can include one or more positioning sensors, such as a global navigation satellite system including, e.g., Global Positoning System (GPS) sensors, Galileo-compatible receivers and/or Inertial Navigation System (INS) sensors.

Each optical transceiver can include a transmitter 121, configured to emit an optical beam, e.g., towards objects 130 and/or towards the ground, and a receiver 122, configured to detect the beam emitted by the transmitter 121 after it has been reflected, e.g. by objects and/or by the ground. In some embodiments, some or all the optical transceivers can correspond to LiDAR (Light Detection And Ranging) systems. A LiDAR system can include a LiDAR transceiver, which emits a laser pulse and detects one or more reflections of the pulse. As an example, a LiDAR transceiver emitting a pulse beam towards a tree can detect a reflection corresponding to foliage and a reflection corresponding to the ground. Each reflection is associated with a height, which can for instance be calculated from the pulse time of flight and the speed of light and/or by triangulation.

Whenever a receiver detects a reflection, point data is generated. The data corresponding to a plurality of points detected during one or more pass by one or more collection vehicle are combined in a point cloud 140, corresponding to an unstructured collection of point data. Point data from multiple sources can for instance be combined by performing a union operation. A point cloud can be stored on persistent storage, for instance using the LAS file format, as defined for instance in the LAS Specification 1.4 - R15 as revised on 9 July 2019 and published by the American Society for Photogrammetry & Remote Sensing, <https://www.asprs.org/wp-content/uploads/2019/07/LAS_1_4_r15.pdf>.

Point data included in a point cloud 140 can for instance include tridimensional *x, y, z* coordinates 141, wherein coordinates *x* and *y* can correspond to geographic coordinates indicating the position where the reflection occurred and z can correspond to the altitude at which the reflection occurred. Additional point data can be acquired. As examples, using a LiDAR system, it is possible to acquire a return number 142, indicating that a reflection detection is the n'th reflection corresponding to a given laser pulse, a number of returns 143, corresponding to the total number of reflections detected with respect to the laser pulse that created the point, an intensity 144, indicating the return strength of the laser pulse, and a scan angle 145, indicating for instance the angle of the pulse with respect to the nadir of an airborne optical sensor. As an example, the coordinates 142 can correspond to three integers, the return number 142, number of returns 143 and intensity 144 can correspond to natural numbers, and the scan angle 145 can correspond to an integer. It can be appreciated that additional types of data can be acquired and stored about each point.

Each or some of the aerial vehicles 110 and/or additional aerial vehicles can also be equipped with equipment configured to capture the radiance of objects 130 passively, performing a process of photometric image formation using, e.g., natural and/or artificial light sources present in the environment to capture an image of objects 130 usign the objects' reflectance. In some embodiments, such image capturing equipment can include one or more cameras 160. Each camera 160 can include for instance components such as lenses, apertures, shutters, image sensors 161 such as metal-oxide-semiconductor-based electronic image sensors, e.g., CMOS or CCD sensors, amplifiers, analog-to-digital converters and image signal processing circuits. In some embodiments, the cameras 160 can include equipment necessary to estimate rational polynomial coefficients with respect to captured images.

The result of this process is an image, e.g., an aerial image 165 when the collection vehicles are aerial vehicles 110 with image sensor(s) 161 pointed towards the nadir. An image captured by an image sensor 161 can be represented as a pixel matrix. For instance, an image which is *M* pixels high and *N* pixels wide can be represented as an *M* × *N* matrix. It can be appreciated that each pixel in the matrix corresponds to a specific point in a captured object 130. The image can be stored on persistent storage using any suitable file format, for instance a lossless raster image format such as the GeoTIFF format. The image and corresponding matrix can be georeferenced. As an example, when the resolution and the offset of the image are known, a mapping can be established between pixels in the image matrix and geographical coordinates of points in the objects 130. Each pixel in the matrix can be attributed a value representing a characteristic, e.g., of the radiance, of the corresponding point in captured object 130. As an example, an *M* × *N* greyscale image can be represented as an *M* × *N* matrix of rational values in the range [0;1], with a 0 value representing an absence of radiance of the point, i.e., a black pixel, and a 1 value representing a maximal radiance of the point, i.e., a white pixel. As another example, an *M* × *N* RGB colour image can be represented as an *M* × *N* matrix of 3-tuples of rational values in the range [0; 1], each element of the tuple representing the intensity of one of the primary colours red, green and blue of the corresponding pixel/point. Alternatively, an *M* × *N* RGB colour image can be represented as an 3 × *M* × *N* tensor of real values in the range [0; 1], with the first axis corresponding to three colour channels and the subsequent two axes corresponding to bidimensional pixels that can be mapped to points of objects 130.

It can be appreciated that, even if they are captured by a camera 160 pointing towards the nadir of an aerial collection vehicle 110, the aerial images may not correspond to orthoimages, i.e., aerial images with a uniform scale corresponding to a predetermined map projection. With respect to aerial images, system 100 can include an optional image orthorectification module, allowing for the captured image to be rectified such that the aerial image 165 can correspond to an orthoimage. Orthorectification can be used to erase distortions or displacements in the images, for instance those caused by a camera angle that does not exactly correspond to the nadir of the collection vehicle and/or by topographic relief, to obtain aerial images with a uniform scale corresponding to a predetermined map projection. A number of existing approaches can be used alone or in combination, including applying corrections using for instance ground control points, position and orientation information, e.g., from the GPS and the INS, and/or using either an existing digital elevation and/or surface model and/or a model created from the acquired LiDAR data. The resulting images can be named for instance orthorectified images, orthoimage or orthophotos. In some embodiments, an orthorectified image can correspond to the merger of a plurality of orthophotos, yielding an ortho mosaic. For simplicity, in the present disclosure, "aerial image" 165 can correspond to any of a raw aerial image, a perspective image, an unrectified georeferenced image, an orthorectified image, an orthoimage, an orthophoto and/or an ortho mosaic.

In some embodiments, the system 100 includes a LiDAR data segmentation module 150 configured to perform a segmentation of the LiDAR point cloud 140.

In some embodiments, a semantic segmentation is performed, i.e., each point of the point cloud is assigned to one of a plurality of classes. As an example, two classes can be used, one corresponding to vegetation points, indicating that the point corresponds to a reflection of the beam on vegetation, and one corresponding to ground points, indicating that the point corresponds to a reflection of the beam on the ground. In some embodiments, additional classes can be used, e.g., water, building and/or noise classes. Any suitable method can be used to perform the semantic segmentation of the point cloud. In some embodiments, conventional geometrical and/or manual classification approaches can be used. In some embodiments, the LiDAR data segmentation module 150 includes a neural network, for instance a deep learning network such as a convolutional neural network (CNN), trained to input LiDAR point data and output a predicted class 149 or a vector of class probabilities for each point. As an example, a network trained according to the approach described in Patent Publication Nos. US 2024/0404064 A1 and/or EP 4 471 728 B2 can be used.

The system 100 includes a panoptic segmentation module 170 configured to perform a panoptic segmentation of the LiDAR point cloud 140. The panoptic segmentation module 170 is at least configured to delineate each single tree. Delineating each tree can include assigning an identifier 147, e.g., a number to each LiDAR point of the point cloud 140 that corresponds to one specific tree. This makes it possible to define a subset of the LiDAR point cloud 140 that corresponds to each single tree instance, which can be called a tree point cloud. The delineated trees can be used to populate the tree inventory 198, along with any data of interest that can be extracted or measured at this stage for each delineated tree, such as for instance height, diameter, canopy width and/or coordinates such as centroid coordinates and/or bounding polygon coordinates. In some embodiments, a first, semantic segmentation is performed on the LiDAR point cloud 140, such that the input of the panoptic segmentation module 170 is a LiDAR point cloud for which some or all LiDAR points is assigned a class 149. In some embodiments, the panoptic segmentation module 170 is configured to perform a semantic segmentation of the LiDAR point cloud 140, assigning a class 148, which, if a prior semantic segmentation was performed, can correspond to an additional class or a finer class, e.g., a subclass, to some or each LiDAR point. For each of reference, the classes assigned by the LiDAR data segmentation module 150 can be described as "semantic classes" or "semantic segmentation classes" 149 and the classes assigned by the panoptic segmentation module 170 can be described as "panoptic classes" or "panoptic segmentation classes" 148. In some embodiments, the panoptic segmentation module is configured to perform a finer semantic segmentation of the point classified as vegetation by the segmentation module 150. As an example, each LiDAR point classified as vegetation by segmentation module 150 can be further classified as either low vegetation or tree. In some embodiments, one or more of the semantic segmentation module 150, the panoptic segmentation module 170 and an additional module (not shown) can be configured to identify points corresponding to hedges so that they are not processed by the panoptic segmentation module 170, effectively or conceptually resulting in pruning these points from the point cloud. Each of the segmentation or pruning steps described above contributes to making the processing more efficient and less intensive in terms of computational resources, by minimizing the processing that is performed and does not contribute to the tree inventory 198.

The panoptic segmentation module 170 can be configured to process LiDAR data to classify trees by integrating semantic segmentation and instance clustering. It can employ a neural network backbone 172 to extract pointwise features, including spatial and contextual information. The neural network 172 can employ various architectures, such as U-Nets, PointNet++, Submanifold Sparse Convolutional Networks and/or any suitable version of Point Transformers. The neural network 172 can feed into two branches, including one configured to predict a class 147 for each LiDAR point, and one configured to calculate offset vectors guiding points toward their respective instance centroids. These offsets help differentiate nearby objects of the same class, improving clustering accuracy. Following feature extraction, a clustering submodule 174 can group points into clusters, using any suitable clustering algorithm. In some embodiments, the clustering process can use queries to facilitate efficient selection of spatially related points. As examples, ball queries can be used to identify points within a spherical neighbourhood of a given point, boolean queries can be used to refine clusters by applying logical conditions, such as combining points with matching semantic labels and spatial proximity, and/or voxel queries can be used to organize points into discretized tridimensional grids to simplify proximity calculations based on a suitable definition of tridimensional adjacency, e.g., based on face, edge and/or vertex connections, generating for instance a 6-, 18- or 26-neighbourhood definition. Alternative clustering strategies, such as density-based clustering such as DBSCAN or hierarchical clustering can be additionally or alternatively used. In some embodiments, the clustering is based on coordinate sets: original and offset-shifted. In some embodiments, the clustering is based on only one set of coordinates: either the original or the offset-shifted set. In some embodiments, cluster quality is evaluated using a scoring mechanism, which via non-maximum suppression to eliminate overlapping clusters.

In some embodiments, the panoptic segmentation module 170 advantageously does not use a canopy height model (CHM) to delineate tree instances, which allows for the precise delineation of trees belonging to different crown classes, as further explained below. In other words, in some embodiments, the panoptic segmentation can be said to be "canopy height model-agnostic" or "canopy height model-independent". As an example, performing the panoptic segmentation without a CHM makes it possible to obtain an accurate delineation of overtopped trees, i.e., trees that are substantially hidden by neighbouring, taller trees, and whose crown can therefore be located below the vegetation height determined by the CHM for their location. In some embodiments, a canopy height model is not generated, saving computational resources such as processor time and memory. In other words, in some embodiments, the system 100 can be said to be "canopy height model-agnostic" or "canopy height model-independent".

The system 100 can include a digital terrain model (DTM) generator 182 configured to process the LiDAR point cloud to produce a DTM, e.g., a representation of the ground surface, excluding points corresponding to above-ground objects. The generator 182 can employ any suitable techniques to classify and filter the LiDAR points, including, for instance, identifying ground points based on elevation gradients, point density, or spatial proximity to neighbouring points. In some embodiments, the generator 182 applies iterative algorithms, such as progressive morphological filtering, to distinguish ground points by incrementally removing non-ground features based on their height above a localized surface estimate. In some embodiments, the DTM generator 182 can leverage the output of a semantic segmentation module 150 to determine whether a LiDAR point corresponds to the ground or not. Alternatively or additionally, the DTM generator 182 can utilize machine learning models, such as neural networks or decision trees, trained on labelled datasets to classify points as ground or non-ground. In some embodiments, the generator 182 segments the point cloud into voxels or tiles and analyzes these subdivisions to identify ground points more efficiently. Other approaches, such as triangulated irregular networks or grid-based interpolation methods, can be used to construct the DTM once ground points are identified.

The system 100 can include a tree point cloud distorter 184 configured to process tree point clouds, leveraging the digital terrain model (DTM) to project the LiDAR points into a format suitable for integration with aerial image 165. Using the DTM as a reference, the distorter can adjust the spatial positioning of the set of LiDAR points corresponding to a single tree to align with the bidimensional plane of the image while preserving their relative arrangement to maintain tree-specific features. In some embodiments, the tree point cloud distorter 184 applies a vertical projection by subtracting the corresponding DTM elevation from the LiDAR points, effectively flattening the tree points to match a ground-level plane defined by the image 165. Additionally or alternatively, the distorter can use a radial projection to map tree points based on their spatial distribution around a trunk axis or centroid. Additional techniques, such as scaling or rotation, can be employed to further adjust the tree points for alignment with the perspective or resolution of the image 165. In some embodiments, the bidimensional coordinates extracted by the distorter 184 can be used as tree coordinates in the tree inventory 198 in addition to or as an alternative to the raw LiDAR coordinates.

The system 100 can include a crown classifier 186 configured to determine a crown class for each single tree based on the corresponding tree point cloud. As examples, crown classes can be used to distinguish dominant trees, which can have tall, broad crowns allowing them to receive full sunlight from all sides, co-dominant trees, having moderate crowns in the upper canopy allowing them to receive sunlight from above, intermediate trees, having smaller and/or partially shaded crowns, allowing them to receive limited sunlight from above, and/or overtopped or suppressed trees, having crowns substantially entirely shaded by taller trees, allowing them to receive minimal or no sunlight. In some embodiments, the crown classes can be relied on as a relevant indicator of whether an aerial image 165 corresponding to the area where a particular tree is located will include data that would assist the species classification module 190 in predicting the species of the tree. In some embodiments, the crown class of each particular tree can correspond to either a dominant class, indicating that the image 165 will mostly show the particular tree and is therefore likely to improve the classification process, or an overtopped class, indicating that the image 165 will mostly show a tree overtopping the particular tree and is therefore likely not to improve or even undermine the classification process. The crown classifier 186 may implement one or more algorithms that analyze characteristics of the tree point clouds, such as the maximum height, the distribution of points within different vertical strata, or the spatial relationship of a particular tree to surrounding trees. For example, the algorithm may perform a pairwise comparison of the maximum height of two tree point clouds or calculate the proportion of LiDAR points located in upper canopy layers. As an example only, the algorithm can include a pairwise comparison based on the *z* coordinates of points includes in tree point clouds having points with substantially similar *x, y* coordinates. Additionally or alternatively, the classifier 186 may analyze the density of LiDAR points at various elevations or consider the proximity of neighbouring tree point clouds to identify trees that are overtopped. In some embodiments, the crown classifier 186 may utilize machine learning techniques, such as a neural network or a decision tree algorithm, trained on labelled data to classify trees based on patterns in the point cloud data. Other techniques, such as rule-based heuristics or the results of the clustering performed by the panoptic segmentation module 170, may also be employed.

The system 100 can include an image cropper 188 configured to extract a specific portion of the image 165 that corresponds to the tree based on the distorted tree point cloud provided by the tree point cloud distorter 184. The cropper 188 can use the spatial information from the distorted tree point cloud to identify the region of the image 165 that aligns with the tree's location and boundaries. As an example, this process can involve defining a bounding box or a polygon around the tree's projected points, which have been adjusted to match the ground level of the image 165. Once the tree's boundary is defined, the cropper 188 can extract the relevant portion of the image 165. The cropper 188 can further, for instance, ensure that the tree is centred and scaled appropriately. In some embodiments, the cropper 188 is configured to allow for adjustments such as expanding the crop region to include a margin of surrounding terrain or adjusting for slight misalignments between the tree point cloud and image.

The system 100 includes a species classification module 190 configured to predict the species of a particular tree based on the LiDAR point cloud 140, and in particular based on the tree point cloud including LiDAR points corresponding to the particular tree, for instance determined by the panoptic segmentation module 170. Once a tree species has been predicted for a given tree, the tree inventory 198 can be updated with the predicted tree species. In some embodiments, the species classification module 190 is further configured to rely on the aerial image 165, and in particular to a crop of the image reflecting the tree's visual representation within the broader context of the target area, for instance determined by the image cropper 188. In some embodiments, the species classification module 190 is configured to rely on just LiDAR data. In some embodiments, the species classification module 190 is configured to rely either on just LiDAR data or on both LiDAR and image data based on an assessment of whether using the image data is likely to improve the classification process, for instance, based on the crown class determined by the crown classifier 186. In some embodiments, the image data is used for dominant trees and is not used for overtopped trees.

In some embodiments, the classification module 190 includes one or more neural networks. In some embodiments, the classification module 190 includes a neural network with an encoder-classifier architecture. In some embodiments, the classification module 190 includes a LiDAR data encoder 192. In some embodiments, the classifier module 190 further include an image encoder 194. In some embodiments, the classification module 190 includes separate LiDAR data encoder 192 and image encoder 194. The LiDAR data encoder 192 can for instance include a PointNet or PointNet++ encoder, a VoxelNet encoder, a dynamic graph CNN, a tridimensional CNN taking for instance as input a point cloud rasterized as a voxel grid, a graph neural networks taking for instance as input a graph in which each LiDAR point corresponds to a vertex and edges encode spatial relationships between LiDAR points, point and/or set transformers, and/or any other suitable neural architecture that can be trained to accept a set of LiDAR points, for instance corresponding to a single tree, as input and generate a vectorial embedding of the set of LiDAR points as output. The image encoder 194 can for instance include a standard bidimensional CNN encoder, a U-Net encoder, a residual network (ResNet) encoder, a vision transformer, a DenseNet encoder, and/or any other suitable neural architecture that can be trained to accept an image, for instance an aerial tree image, as input and generate a vectorial embedding of the image as output. When both encoders 192, 194 are used, the resulting vectorial embeddings can be aggregated to form a single vectorial embedding of both the set of LiDAR points and the image. Any suitable aggregation method can be used, such as for instance concatenation, pooling and/or element-wise aggregation.

The classification module 190 can also include a classifier 196 configured to accept, as input, an input vector corresponding to the embedding of the a of LiDAR points or an input vector corresponding to the embedding of both the set of LiDAR points and the image. It can be appreciated that a single classifier 196 can be configured to accept both types of vectors, or that a distinct classifier can be associated with each type of vector. The classifier can also include at least one neural network, for instance a neural block including a number of fully connected layers, the first connected layer having for instance a width corresponding to the dimension of the input vector and being configured to accept the input vector as input, and the last connected layer for instance having a width corresponding to the number of classes, e.g., the number of tree species known to the model, and being configured to output a vector from which a class prediction can be extracted, for instance an output vector corresponding to a probability distribution over the classes, e.g., the tree species known to the model. In some embodiments, the classifier 196 includes a non-neuronal model, for instance a support vector machine and/or a gradient boosting machine trained to accept as input the deep feature representations generated by the neural network encoders 192, 194 and output a class, e.g., a tree species, prediction.

In some embodiments, the encoders are trained using self-supervised or non-supervised training. As an example, the encoders can be trained as autoencoders. In some embodiments, the encoders are trained using supervised learning, for instance guided by the classifier 196 or by a temporary classifier. In some embodiments, the LiDAR encoder 192 and the image encoder 194 are trained separately, making it possible to leverage training datasets which can include, for instance, training sets of LiDAR points corresponding to training trees without an associated image and/or training images corresponding to training trees without an associated set of LiDAR points. As an example, in a first training stage, the LiDAR encoder 192 and a first temporary classifier taking as input the vector output by the encoder 192 can be trained using all training sets of LiDAR points labelled with a tree species, and the image encoder 194 and a second temporary classifier taking as input the vector output by the encoder 194 can be trained using all training images labelled with a tree species, and, in a second training stage, the final classifier 196 taking as input the aggregation of the vectors output by encoders 192 and 194 can be trained using only the training samples including both a training sets of LiDAR points corresponding to a tree and a training image of the same tree, labelled with the tree species. **In** other words, two datasets can be used for training the two encoders 192, 194-a first dataset including labelled tree point clouds and a second dataset including labelled tree aerial images-and the intersection of these two datasets can be used to train the classifier 196.

It can be appreciated that different training methodologies can be used. As an example, the first stage can include a first step of training one or both encoders using self-supervised or non-supervised training and a second step of fine-tuning the one or both encoders using supervised training. As another example, the parameters, including for instance weights of biases of one or both encoders can be entirely or partially frozen or unfrozen during the second stage of training the classifier 196. In some embodiments, the "temporary" first classifier, i.e., the classifier trained by training the LiDAR encoder 192, can be used as the final encoder 196 for cases in which only LiDAR data is used as input to the species classification module 190 and an image encoder 194 is therefore not needed.

As discussed above, the acquisition and annotation of sufficient training data can be costly. In some embodiments, one or more models disclosed above, such as the models used in the panoptic segmentation module 170, including in particular the neural network 172, and/or the models used in the species classification module 190, including in particular the LIDAR encoder 192, the image encoder 194 and the classifier 196, are using an augmented dataset. It can be appreciated that classical augmentation methods can be used, including for instance random rotations, scaling, cropping, flipping and/or jitter. In some embodiments, the dataset is alternatively or additionally augmented by the inclusion of synthetic tree formations. As an example, sets of ground-truth tree instances can be randomly combined and arranged to create any desired number of synthetic samples. Compared to traditional augmentation method, augmenting a dataset with synthetic tree formations makes it possible to add a wide range of distinct, varied and realistic samples. Advantageously, such a high diversity means that the augmented data includes significant variations, offering a richer representation of the data, and can help to increase the robustness of the model by exposing it to less frequent configurations during training.

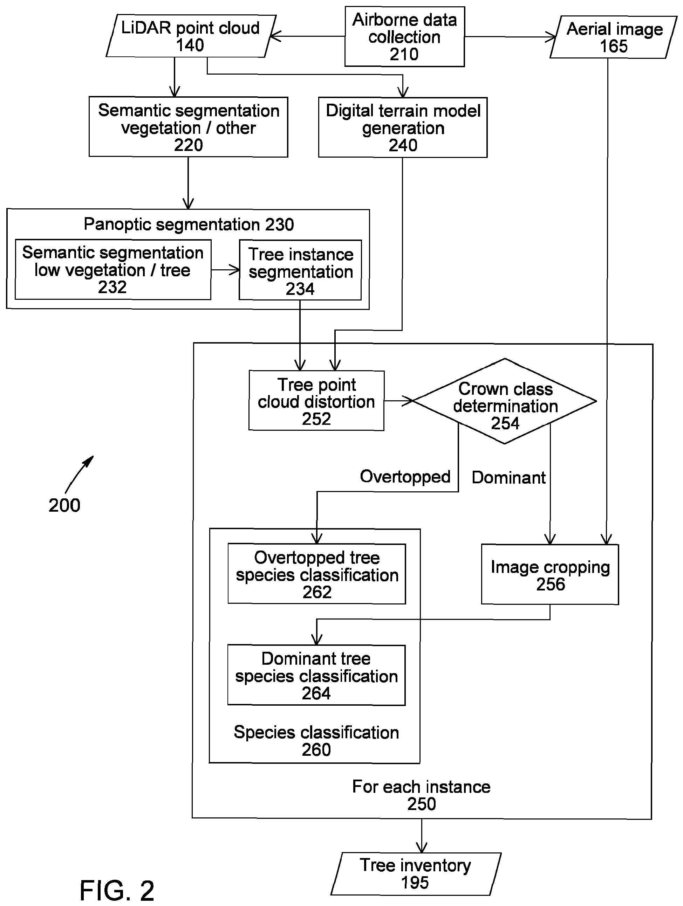

With reference to figure 2, an exemplary method 200 for generating an inventory of trees in a target area is provided. Broadly described, the method 200 includes a data collection step 210, segmentation steps 220 to 234 and instance classification steps 250 to 264 to generate a tree inventory 195. **In** some embodiments, the method 200 is performed with a system substantially similar to the system 100 illustrated in figures 1A and 1B.

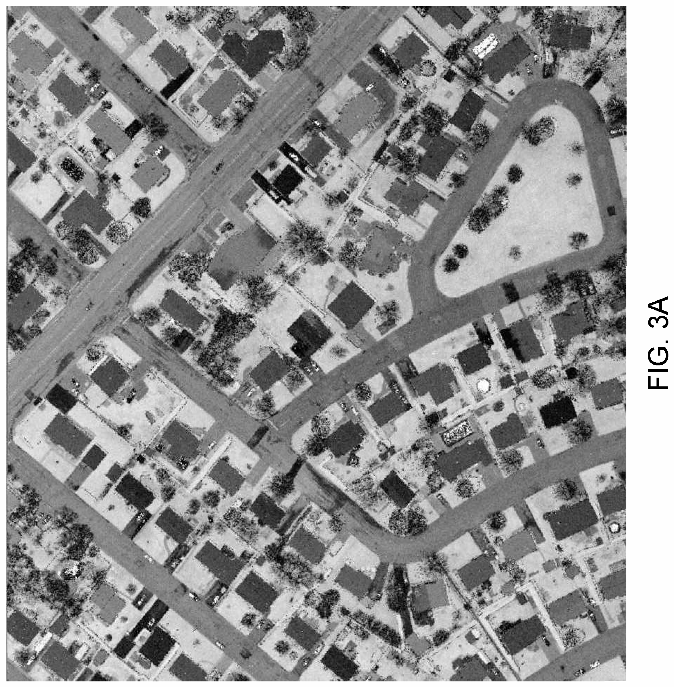

An initial step 210 can include airborne data collecting, including the acquisition of a LiDAR point cloud 140 and/or an aerial image 165 of the target area, for instance by using aerial vehicles. Figure 3A illustrates an example of a visual representation of LiDAR intensity data capturing a possible target area.

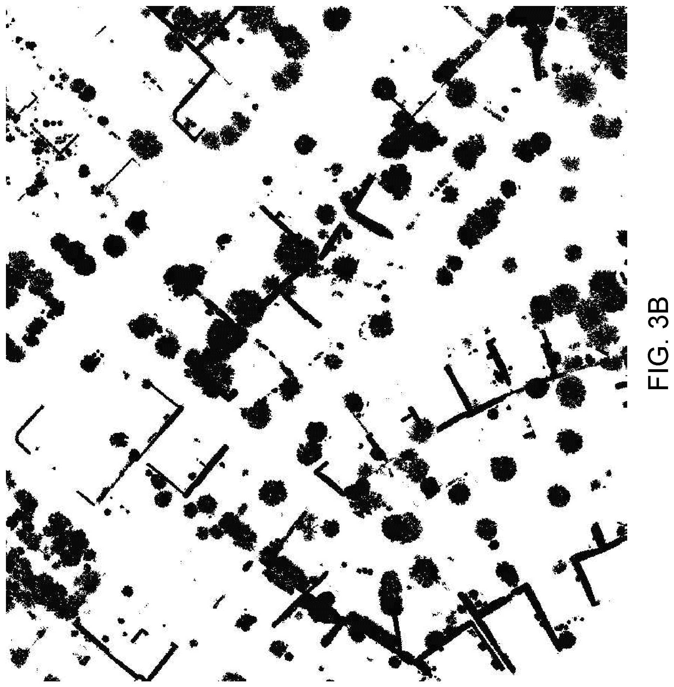

A subsequent step 220 can include performing an initial, semantic segmentation of the LiDAR data 140. It can result in each point being classified as either vegetation or something else. Figure 3B illustrates an example bidimensional representation of a LiDAR point cloud including only points that have been classified as vegetation.

A subsequent step 230 includes performing a panoptic segmentation of the LiDAR data 140, in particular of the data corresponding to vegetation. Step 230 can include a substep 232 of performing an additional semantic segmentation, for instance, to distinguish low vegetation and trees. Step 230 can also include a substep 234 of performing a tree instance segmentation, for instance by assigning a common identifier to each point included in a single tree point cloud.

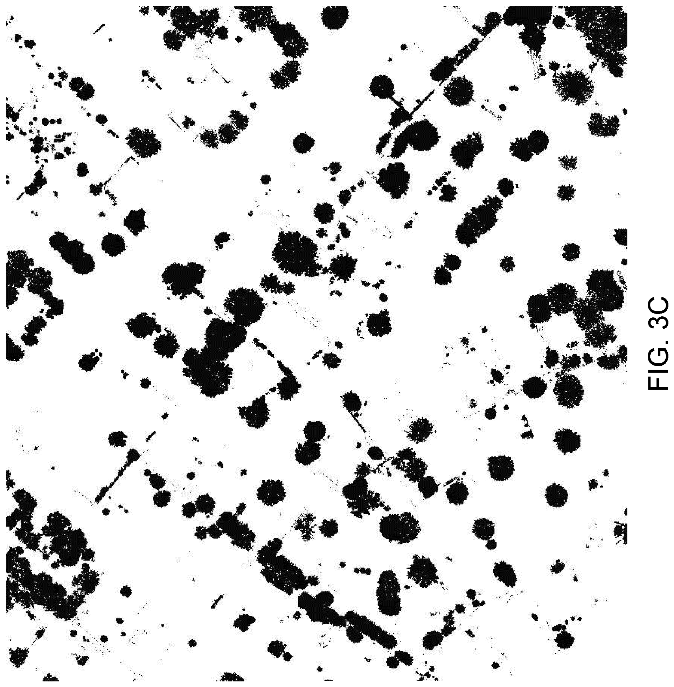

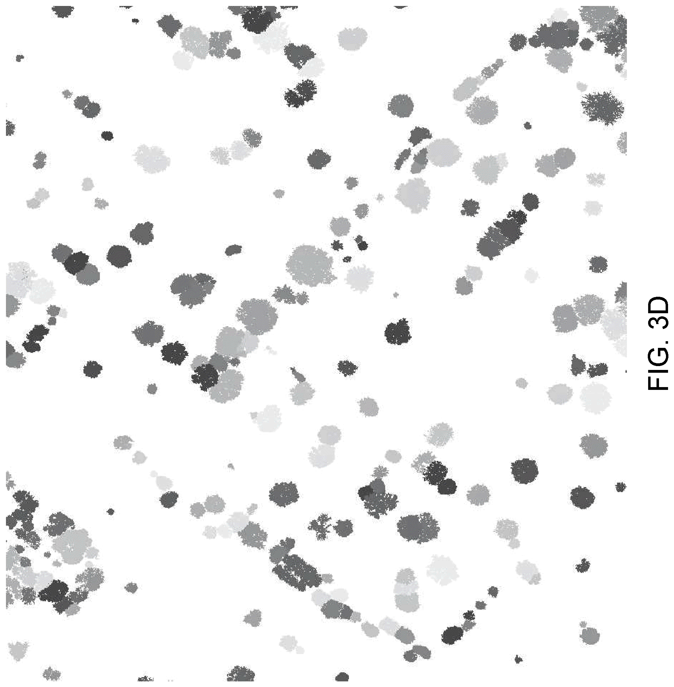

At some point during or after step 220 or 230, an algorithm can be used to remove hedges from the points classified as vegetation and/or trees. Figure 3C illustrates the example bidimensional representation of a LiDAR point cloud including only points that have been classified as non-hedge trees. Figure 3D illustrates the example bidimensional representation of a LiDAR point cloud including only points that have been classified as non-hedge trees in which tree instances have been delineated and each non-hedge tree point has been assigned to a single tree instance.

Step 240 can include generating a digital terrain model from the LiDAR data. In some embodiments, the semantic segmentation of step 220 includes creating a ground class, which can be leveraged to generate the DTM.

Once the tree point clouds delineated in step 230 and the DTM generated in step 240 are available, each tree point cloud can be processed by submethod 250. In some embodiments employing both LiDAR and photogrammetric data, for each tree point cloud, the tree point cloud is first distorted in step 252 into a coordinate system that is common to the distorted point cloud and the image 165, making it possible in step 256 to crop the image to obtain a cropped image corresponding to a visualization of the tree instance, at least if the tree is determined in crown class determination step 254 to be a dominant tree, i.e., a tree for which an informative image can be obtained. Step 260 includes classifying the tree instance. In some embodiments, classification step 262 can be applied to all tree instances, method 200 thereby not requiring the acquisition of an aerial image. In some embodiments employing both LiDAR and aerial images, a classification step 262 can be applied to tree instances corresponding to overtopped trees, and a different classification step 264 can be applied to tree instances corresponding to dominant trees. For instance, because the aerial image is less informative for overtopped trees, using a classification model trained on LiDAR data but no aerial image can lead to better results while being more computationally efficient. On the other hand, because the aerial image is more informative for dominant trees, using a classification model trained on LiDAR data and aerial images can lead to better results for this type of tree.

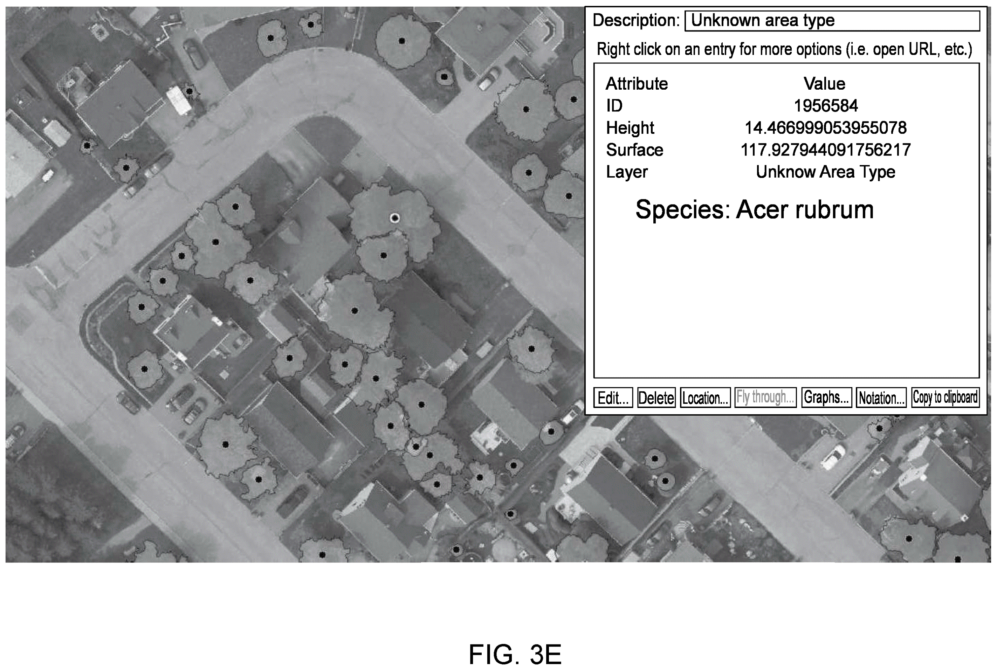

Finally, data about each tree instance, and in particular the species predicted in step 260, can be used to generate the tree inventory 195. Figure 3E illustrates an example tree inventory map, including an aerial image overlaid with centroids and polygons from a tree inventory 195, and making it possible to click a tree to open a popup window displaying additional information about the tree of interest, including in particular its predicted species.

One or more systems, methods, modules, steps or functionalities described herein may be implemented in computer programs executed on one or more processing devices, each comprising at least one processor, a data storage system (including both volatile and/or non-volatile memory and/or storage elements), and optionally at least one input and/or output device. These processing devices encompass a broad range of electronic systems capable of receiving, processing, and/or transmitting data. Examples of processing devices include, without limitation, general-purpose computers, specialized computing devices, and embedded systems. Processing devices may be implemented on dedicated hardware, including programmable hardware such as field-programmable gate arrays (FPGAs), or as software-based solutions on cloud computing platforms or serverless architectures.

Processing devices suitable for implementing the present invention may include programmable logic units, mainframe computers, servers, personal computers, laptops, cloud-based systems, personal digital assistants (PDAs), cellular telephones, smartphones, wearable devices, tablets, video game consoles, and portable video game devices. Each of these devices has the ability to execute instructions and can operate individually or in combination to perform the functionality described. The processing devices may be deployed in a variety of configurations, from single-device implementations to distributed systems that involve multiple devices collaborating to achieve a common purpose. For example, a method could be implemented on a single microcontroller in an embedded system, or distributed across a network of servers that share computational tasks.

The instructions that enable a processing device to perform a given method or function can be stored in the form of a computer program. This computer program may be implemented in a high-level programming language, such as an imperative language, including procedural or object-oriented languages like C++, Java, or Python, which are suited for a wide range of applications and can easily interface with various system components. High-level programming languages can also include declarative languages, such as functional languages like Haskell or logic languages like Prolog, which allow developers to specify what the program should accomplish rather than describing step-by-step operations. These high-level languages can improve development efficiency and code readability.

Alternatively, computer programs may be implemented in low-level languages, such as assembly or machine code, especially when direct hardware control or optimization is required. Low-level languages are closer to machine instructions and provide precise control over hardware resources, which can be advantageous in resource-constrained environments, such as embedded systems. Programs written in low-level languages can be used in applications that require high performance, small memory footprints, or real-time processing capabilities.

Each computer program may be either compiled or interpreted. Compiled languages, such as C or C++, can be transformed into machine code optimized for a specific hardware configuration, allowing efficient execution. Compilation can result in highly optimized executables that are tailored to the underlying architecture, which is advantageous in performance-critical applications. Interpreted languages, such as Python or JavaScript, offer flexibility by interpreting code at runtime. This allows for rapid development and platform independence, as the same code can be run on different systems with minimal modifications. Hybrid approaches, such as Java bytecode or .NET Common Intermediate Language (CIL), combine elements of both compiled and interpreted paradigms. In these cases, code is compiled to an intermediate representation that can be executed by a virtual machine on various platforms, providing cross-platform compatibility.

Each computer program implementing the methods or systems described herein is preferably stored on a computer-readable storage medium or device. Examples of such storage media include hard drives, solid-state drives, optical disks, flash memory, and magnetic tape. The computer-readable storage medium is readable by a general or special-purpose programmable computer, which, upon reading the instructions, can configure itself to perform the steps described herein. These instructions may include executable code, scripts, or markup that instructs the computer on how to operate and handle data, making the system or method functional. In some embodiments, the system or method may be embedded within an operating system running on a programmable computer, allowing for deeper integration with the hardware and enabling enhanced performance, security, or user interface features.

Processing devices implementing the present invention may contain a variety of hardware components that support program execution. Processors used within these devices include general-purpose central processing units (CPUs), which are capable of executing a wide variety of instructions, as well as specialized processors. Examples of specialized processors include graphics processing units (GPUs), which can be optimized for parallel processing and/or used in data-intensive applications like machine learning, digital signal processors (DSPs), which are designed for handling real-time audio, video, and other signal processing tasks, and application-specific integrated circuits (ASICs), which are tailored to specific functions and are often used in applications requiring high efficiency. Multicore and/or multithreaded processors can allow for concurrent execution of multiple tasks, improving overall performance, for instance in multi-user or real-time environments.

The processing device may further include various types of memory. Volatile memory, such as registers, cache, and random-access memory (RAM), can be used for temporary data storage during active program execution, providing fast access to data that the processor frequently uses. Non-volatile memory, such as read-only memory (ROM), flash memory, solid-state drives, hard disks, and optical disks, can be used to retain data even when the processing device is powered off, making it suitable for long-term data storage. Other examples of non-volatile storage media include diskettes, magnetic tapes, chips, and compact disks, among others. The type of memory selected can depend on specific requirements, such as the need for rapid access, data retention, or data durability under power cycling. The memory configuration of a processing device can be adjusted to support varying levels of computational demand, from lightweight applications with minimal memory requirements to complex systems requiring large data caches.

Networking solutions within a processing device enable inter-process communication and network communication over wired or wireless connections. Examples of networking technologies include Ethernet for high-speed wired connections, Wi-Fi for wireless data transmission, Bluetooth for short-range device communication, and cellular networks for broader geographic coverage. These networking solutions support various network topologies, including local area networks (LAN), wide area networks (WAN), and other network types such as personal area networks (PAN) and metropolitan area networks (MAN), as well as the Internet. Through these networks, processing devices can communicate with one another to distribute tasks, share data, and collaborate on complex computations. This communication can occur within a single building or across geographically dispersed locations, depending on the application requirements.

Implementing networking security measures can be advantageous to protect data as it travels across potentially vulnerable channels. Key security principles can include confidentiality, integrity, and availability. Confidentiality can be achieved for instance through encryption protocols like Secure Sockets Layer (SSL) and Transport Layer Security (TLS), ensuring that data remains private. Integrity can be maintained for instance with cryptographic hashing and/or digital signatures, which can detect tampering, while availability can be protected for instance by redundancy, load balancing, and defences against denial-of-service (DoS) attacks. Access control mechanisms, including multifactor authentication and role-based access control, can be used to regulate network access. Network segmentation, such as virtual LANs (VLANs) and demilitarized zones (DMZs), can be implemented to limit access to sensitive areas and reduces the impact of breaches, while firewalls filter traffic based on predefined rules, providing an essential barrier between internal and external networks.

Advanced security measures for networking can be implemented, for instance, including encryption for wireless networks through protocols like Wi-Fi Protected Access 3 (WPA3), which can prevent unauthorized access to Wi-Fi. Intrusion detection and prevention systems (IDS/IPS) can be used to monitor network traffic for malicious activity, while virtual private networks (VPNs) can be used to establish secure connections for remote access over public networks. Regular security assessments, such as penetration testing and vulnerability scanning, identify weaknesses, and security information and event management (SIEM) systems may be leveraged to provide real-time insights into potential threats. A layered security approach, or defence in depth, can combine multiple controls across different levels of the network, enhancing resilience against both internal and external attacks by creating multiple barriers that attackers must overcome.

Distributed computing is a possible implementation in which multiple processing devices work together to perform tasks described herein. For example, a method or a method step may execute within a single thread on one processing device or be distributed across multiple threads, cores, or processors on a single device or across multiple devices. Distributed computing can help implement parallelization, where tasks are split into smaller subtasks that are processed concurrently, significantly improving processing speed and efficiency. This approach is well suited to applications with high computational demands, such as data analysis, machine learning, and large-scale simulations. In some implementations, processors are located within a single physical location, while in others, they may be spread across multiple sites, allowing for redundant and resilient computing infrastructures.

Distributed computing can also be implemented within a cloud computing environment, offering flexibility and scalability. Cloud computing architectures enable the allocation of computational resources on demand, allowing tasks to utilize as many or as few resources as needed for efficient execution. For instance, a single computational process may span multiple virtual machines, distributed across data centres in different geographical locations, to achieve optimal performance and fault tolerance. By leveraging multi-tenant architectures and dynamic scaling, cloud platforms allocate resources only as needed, reducing idle computational power. Furthermore, this approach facilitates cost efficiency, as users pay only for the resources they consume. Additionally, cloud computing's ability to pool resources across large-scale infrastructure provides inherent redundancy and resilience, ensuring high availability for critical applications. Cloud computing can include employing containers and microservices to enhance resource efficiency and streamline deployment. Containers encapsulate applications and their dependencies in lightweight, portable units that can run consistently across different environments. This allows distributed computing tasks to be executed reliably across heterogeneous systems, reducing compatibility issues. Microservices architectures further divide applications into smaller, independently deployable services, each responsible for a specific functionality. These services can scale independently, ensuring that resources are allocated precisely where needed and minimizing waste. Together, containers and microservices enable more efficient use of computational resources, shorter deployment cycles, and improved fault isolation.

The systems and methods described herein may also be distributed in one or more computer program products, each including a computer-readable medium that bears computer-usable instructions for one or more processors. These instructions can exist in various forms, including compiled and non-compiled code, providing the flexibility needed for deployment in diverse computing environments. For example, compiled binaries may be optimized for specific hardware, while interpreted scripts or markup files can be deployed in environments where cross-platform compatibility or rapid updates are needed.

The storage and retrieval of data in a computer system may involve various data storage solutions, including relational databases, which store data in structured tables with defined relationships, and NoSQL databases, which offer more flexible storage schemas suited to unstructured or semi-structured data. In-memory databases, which store data entirely in RAM for rapid access, can also be used in applications where low latency is desirable. These data storage solutions may be implemented on local servers, within distributed storage systems, or as part of cloud-based infrastructures, offering scalability and accessibility as required by the application. Distributed storage solutions can enable high availability and fault tolerance, ensuring that data remains accessible even if one part of the storage infrastructure fails.

Input and output devices connected to the processing device can facilitate interaction with users and other systems. Input devices can include standard peripherals, such as keyboards, mice, touchscreens, and microphones, as well as specialized input devices, such as biometric scanners, cameras, and sensors for capturing environmental data. Output devices may encompass monitors, printers, speakers, projectors, and other display systems that present information to users in various formats. These input and output devices enable users to interact with the system in intuitive ways, supporting diverse functionalities from user control of applications to data visualization and multimedia output.

The systems and methods described herein are thus capable of deployment across a broad spectrum of computing environments, supporting applications from simple embedded systems to large-scale distributed computing networks. Each component and approach described herein contributes to the versatility and adaptability of the invention, making it suitable for a wide variety of practical implementations across industries and use cases.

The disclosed neural network implementations may be realized through various configurations of computer hardware, software, or a combination of both, depending on the requirements and constraints of the particular application. For instance, the neural networks may leverage specialized hardware, such as GPUs, tensor processing units (TPUs), FPGAs, and ASICs, which are designed to efficiently handle the high computational demands of training and deploying neural networks. These hardware components are particularly advantageous for accelerating matrix operations, which are central to neural network computations, and can significantly reduce the time needed for training large models and performing inference tasks.

Alternatively, neural networks can be implemented using traditional computer hardware, including CPUs, which are versatile and widely available. While CPUs are not optimized specifically for neural network computations, they can still handle smaller models and less computationally intensive tasks effectively. In cases where flexibility is essential, such as in general-purpose computing environments, implementing neural networks on CPUs allows for integration with other software systems without the need for specialized hardware.

On the software side, neural networks can be created using various programming languages and frameworks. High-level languages such as Python, Java, and C++ are commonly used for neural network development, particularly in conjunction with deep learning libraries and frameworks like TensorFlow, PyTorch, Keras, and Theano. These frameworks provide prebuilt functions, modules, and tools that simplify the process of designing, training, and deploying neural networks. They allow developers to define network architectures, optimize training parameters, and manage data flows with relative ease. For instance, TensorFlow and PyTorch offer extensive support for GPU and TPU integration, enabling seamless transitions between hardware and software environments.

Neural networks implemented in software may also vary based on the type of language and runtime environment used. For example, imperative languages such as Python and Java allow developers to create neural networks using clear, step-by-step procedural code, making the design process intuitive and manageable. Alternatively, functional languages like Lisp and Haskell may also be employed to build neural networks, particularly when focusing on functional aspects of data flow and transformation. Moreover, neural networks can be implemented in either compiled or interpreted languages, where compiled languages, such as C++ or Java, can offer improved execution speed, while interpreted languages like Python provide flexibility and ease of development.

In certain configurations, neural networks may be deployed in distributed computing environments, allowing for parallel processing across multiple processing units or even across different geographic locations. Distributed implementations can be achieved through cloud computing platforms or high-performance computing (HPC) systems, where workloads are split among numerous machines to improve efficiency and scalability. This is particularly useful for training large-scale models that require significant processing power and storage capacity. Distributed computing frameworks such as Apache Spark and Horovod can facilitate the parallelization of neural network computations, enabling large datasets and complex models to be processed in a fraction of the time that would be required on a single machine.

Neural network implementations may also employ hybrid configurations that combine both hardware and software elements. For example, the core neural network computations might be performed on dedicated hardware accelerators like GPUs or TPUs, while the overall system, including data preprocessing and post-processing steps, can be managed by general-purpose software running on CPUs. This hybrid approach optimizes performance by leveraging the strengths of both hardware and software environments, ensuring efficient resource utilization across different components of the system.

Furthermore, it is understood that the neural networks described herein are not limited to any specific type of architecture. Various neural network architectures, including but not limited to convolutional neural networks (CNNs), recurrent neural networks (RNNs), long short-term memory (LSTM) networks, transformers, and generative adversarial networks (GANs), may be implemented depending on the task requirements. These architectures can be tailored to perform tasks such as image recognition, natural language processing, and predictive modelling, each benefiting from different configurations of hardware and software resources to optimize performance.

For secure and reliable deployment, neural networks may also incorporate mechanisms for data integrity, confidentiality, and robustness against adversarial attacks. Security protocols, such as data encryption and access control, may be applied to safeguard sensitive data processed by the neural network. Techniques like differential privacy and secure multiparty computation can be employed to protect data confidentiality during training and inference. Additionally, the implementation may include error-handling mechanisms and redundancy measures to ensure robust operation, even in environments where hardware failures or software bugs may occur.

Overall, the neural networks in this disclosure may be implemented as flexible, scalable systems that leverage combinations of hardware and software elements tailored to the needs of specific applications. This approach provides versatility, allowing the neural networks to be deployed in a wide range of environments, from dedicated hardware systems to virtualized cloud platforms, thereby supporting a diverse set of use cases and performance requirements.

In this disclosure, unless the context explicitly requires otherwise, the term "comprise" and its variations, such as "comprises" and "comprising," are intended to be interpreted in an inclusive manner. This means that the presence of specified features or elements does not exclude the possibility of additional features, elements, or steps being included in various embodiments.

Any reference to prior art publications within this disclosure should not be taken as an acknowledgment or admission that these publications form part of the common general knowledge in the relevant field, whether in any particular jurisdiction or globally.

The examples provided in the above description serve to illustrate specific embodiments and convey certain features and principles. However, those skilled in the art will recognize that individual features, elements, and functionalities within the disclosed embodiments may be adapted, modified, or combined in numerous ways without departing from the intended scope of the described subject matter. Therefore, the foregoing description is meant to be illustrative rather than limiting, with the scope being defined by the appended claims, which are intended to encompass all variations and modifications within the broadest interpretation permitted by applicable law.

## Claims

1. A method for generating an inventory of trees in a target area, the method comprising:
obtaining a LiDAR point cloud acquired by an airborne LiDAR scanner;
generating a digital terrain model based on the LiDAR point cloud;
performing a semantic segmentation by segmenting the LiDAR point cloud into a segmented LiDAR point cloud, the segmented LiDAR point cloud assigning one of a plurality of classes to at least a subset of LiDAR points of the LiDAR point cloud, the classes comprising at least a vegetation class;
performing a panoptic segmentation by segmenting the segmented LiDAR point cloud to:
assign one of a plurality of panoptic segmentation classes to at least a subset of panoptic segmented LiDAR points of the LiDAR point cloud, the panoptic segmentation classes comprising at least a tree class and a low vegetation class, and
assign an instance identifier to each LiDAR point of the LiDAR point cloud of the tree class, thereby delineating a plurality of trees, each tree of the plurality of trees being associated with a respective tree point cloud corresponding to a subset of the segmented LiDAR point cloud;
populating the inventory of trees with the plurality of trees; and
for each respective tree of the plurality of trees:
projecting the respective tree point cloud to the digital terrain model,
providing the projected tree point cloud as input to a first encoder trained to accept as input a set of LiDAR points corresponding to a single tree and generate as output a vectorial embedding of the set of LiDAR points corresponding to the single tree,
defining a classifier input vector based at least on the vectorial embedding of the set of LiDAR points corresponding to the single tree,
providing the classifier input vector as input to a classifier trained to accept as input a vector and generate as output a predicted tree species, and
updating the inventory of trees with the predicted tree species.

2. The method of claim 1, comprising the step of acquiring the point cloud by an aerial vehicle equipped with the LiDAR scanner, the LiDAR scanner comprising at least a transmitter configured to send a laser beam towards an object and a receiver configured to detect a reflection of the laser beam on the object, the LiDAR scanner configured to create point data based on the reflection of the beam, the point data corresponding to the LiDAR point cloud.

3. The method of claim 1 or 2, wherein the point data comprise, for each of a plurality of points, at least one of: coordinates, a return number, a number of returns, an intensity and a scan angle.

4. The method of any one of claims 1 to 3, wherein the panoptic segmentation includes a backbone neural network, preferably wherein the backbone neural network is trained using a dataset augmented with synthetic tree formations generated by randomly combining and arranging ground truth tree instances and/or wherein the backbone neural network is a Point Transformer.

5. The method of any one of claims 1 to 4, wherein the panoptic segmentation is performed without a canopy height model, thereby allowing delineation of overtopped trees.

6. The method of any one of claims 1 to 5, further comprising obtaining at least one aerial image of the target area.

7. The method of claim 6, further comprising determining a crown class of the respective tree based on the projected tree point cloud, the crown class belonging to a set of possible crown classes comprising at least a dominant crown class and an overtopped crown class and, responsive to the crown class corresponding to a dominant crown class:
generating a cropped image from the at least one aerial image of the target area based on the projected tree point cloud;
providing the cropped image as input to a second encoder trained to accept as input a tree image and generate as output a vectorial embedding of the tree image; and
defining the classifier input vector based on an aggregation of the vectorial embedding of the set of LiDAR points corresponding to the single tree and the vectorial embedding of the tree image.

8. The method of claim 7, wherein:
the first encoder and a first temporary classifier block taking the output of the first encoder as input and generating a predicted first species are trained using a first dataset comprising training sets of LiDAR points, each training set of LiDAR point being labelled with a first ground truth species, the first temporary classifier block being discarded after training,
the second encoder and a second temporary classifier block taking the output of the second encoder as input and generating a predicted second species are trained using a second dataset comprising aerial tree images, each aerial tree image being labelled with a second ground truth species, the second temporary classifier block being discarded after training, and
the classifier block is trained using an intersection of the first dataset and the second dataset.

9. A system for generating an inventory of trees in a target area, the system comprising:
at least one aerial vehicle comprising a LiDAR scanner configured to acquire a LiDAR point cloud;
a digital terrain model generator configured to generate a digital terrain model based on the LiDAR point cloud;
a LiDAR data segmentation module configured to perform a semantic segmentation by segmenting the LiDAR point cloud into a segmented LiDAR point cloud, the segmented LiDAR point cloud assigning one of a plurality of classes to at least a subset of LiDAR points of the LiDAR point cloud, the classes comprising at least a vegetation class;
a panoptic segmentation module configured to perform a panoptic segmentation by:
assigning one of a plurality of panoptic segmentation classes to at least a subset of panoptic segmented LiDAR points of the LiDAR point cloud, the panoptic segmentation classes comprising at least a tree class and a low vegetation class, and
assigning an instance identifier to each LiDAR point of the LiDAR point cloud of the tree class, thereby delineating a plurality of trees, each tree of the plurality of trees being associated with a respective tree point cloud corresponding to a subset of the segmented LiDAR point cloud;
a tree point cloud distorter configured, for each respective tree of the plurality of trees, to project the respective tree point cloud to the digital terrain model; and
a species classification module configured to update the inventory of trees with a predicted tree species, the species classification module comprising:
a LiDAR encoder trained, for each respective single tree of the plurality of trees, to accept as input the projected tree point cloud and to generate as output a vectorial embedding of the set of LiDAR points corresponding to the single tree, and
a classifier trained to accept as input a classifier input vector and generate as output the predicted tree species, the classifier input vector being defined based at least on the vectorial embedding of the set of LiDAR points corresponding to the single tree.

10. The system of claim 9, wherein the point cloud comprises, for each of a plurality of points, at least one of: coordinates, a return number, a number of returns, an intensity and a scan angle.

11. The system of claim 9 or 10, wherein the panoptic segmentation module includes a backbone neural network, preferably wherein the backbone neural network is trained using a dataset augmented with synthetic tree formations generated by randomly combining and arranging ground truth tree instances and/or wherein the backbone neural network is a Point Transformer.

12. The system of any one of claims 9 to 11, wherein the panoptic segmentation module is configured to perform panoptic segmentation without a canopy height model, thereby allowing delineation of overtopped trees.

13. The system of any one of claims 9 to 12, wherein each of the at least one aerial vehicle further comprises a camera configured to acquire at least one aerial image of the target area.

14. The system of claim 13, further comprising:
a crown classifier configured, for each respective tree of the plurality of trees, to determine a crown class of the respective tree based on the projected tree point cloud, the crown class belonging to a set of possible crown classes comprising at least a dominant crown class and an overtopped crown class; and
an image cropper configured, for each respective tree of the plurality of trees belonging to the dominant crown class, to generate a cropped image from the at least one aerial image of the target area based on the projected tree point cloud,
wherein the species classification module further comprises an image encoder trained, for each respective tree of the plurality of trees belonging to the dominant crown class, to accept the cropped image as input and to generate as output a vectorial embedding of the tree image, and
wherein, responsive to the crown class corresponding to a dominant crown class, the classifier input vector is defined based on an aggregation of the vectorial embedding of the set of LiDAR points corresponding to the single tree and the vectorial embedding of the tree image.

15. The system of claim 14, wherein:
the first encoder and a first temporary classifier block taking the output of the first encoder as input and generating a predicted first species are trained using a first dataset comprising training sets of LiDAR points, each training set of LiDAR point being labelled with a first ground truth species, the first temporary classifier block being discarded after training,
the second encoder and a second temporary classifier block taking the output of the second encoder as input and generating a predicted second species are trained using a second dataset comprising aerial tree images, each aerial tree image being labelled with a second ground truth species, the second temporary classifier block being discarded after training, and
the classifier block is trained using an intersection of the first dataset and the second dataset.

## Patentansprüche

1. Verfahren zum Generieren eines Bauminventars in einem Zielgebiet, das Verfahren umfassend:
Erlangen einer LIDAR-Punktwolke, die von einem luftgestützten LIDAR-Scanner erfasst wird;
Generieren eines digitalen Geländemodells basierend auf der LIDAR-Punktwolke;
Durchführen einer semantischen Segmentierung durch Segmentieren der LIDAR-Punktwolke in eine segmentierte LIDAR-Punktwolke, wobei die segmentierte LIDAR-Punktwolke eine von einer Vielzahl von Klassen zu mindestens einer Teilmenge der LIDAR-Punkte der LIDAR-Punktwolke zuweist, die Klassen umfassend mindestens eine Vegetationsklasse;
Durchführen einer panoptischen Segmentierung durch Segmentieren der segmentierten LIDAR-Punktwolke zu Folgendem:
Zuweisen einer von einer Vielzahl von panoptischen Segmentierungsklassen zu mindestens einer Teilmenge von panoptisch segmentierten LIDAR-Punkten der LIDAR-Punktwolke, die panoptischen Segmentierungsklassen umfassend mindestens eine Baumklasse und eine Niedervegetationsklasse, und
Zuweisen einer Instanzkennung zu jedem LIDAR-Punkt der LIDAR-Punktwolke der Baumklasse, wodurch eine Vielzahl von Bäumen abgegrenzt wird, wobei jeder Baum der Vielzahl von Bäumen mit einer jeweilige Baum-Punktwolke assoziiert ist, die einer Teilmenge der segmentierten LIDAR-Punktwolke entspricht;
Füllen des Bauminventars mit der Vielzahl von Bäumen; und
für jeden jeweiligen Baum der Vielzahl von Bäumen:
Projizieren der jeweiligen Baum-Punktwolke auf das digitale Geländemodell,
Bereitstellen der projizierten Baum-Punktwolke als Eingang für einen ersten Encoder, der darauf trainiert ist, als Eingang eine Menge von LIDAR-Punkten, die einem einzelnen Baum entsprechen, zu akzeptieren und als Ausgang eine vektorielle Einbettung der Menge von LIDAR-Punkten, die dem einzelnen Baum entsprechen, zu generieren,
Definieren eines Klassifizierer-Eingangsvektors, der zumindest auf der vektoriellen Einbettung der Menge von LIDAR-Punkten, die dem einzelnen Baum entsprechen, basiert,
Bereitstellen des Klassifizierer-Eingangsvektors als Eingang für einen Klassifizierer, der darauf trainiert ist, als Eingang einen Vektor zu akzeptieren und als Ausgang eine vorhergesagte Baumart zu generieren, und
Aktualisieren des Bauminventars mit der vorhergesagten Baumart.

2. Verfahren nach Anspruch 1, umfassend den Schritt eines Erfassens der Punktwolke durch ein Luftfahrzeug, das mit dem LIDAR-Scanner ausgestattet ist, der LIDAR-Scanner umfassend mindestens einen Sender, der konfiguriert ist, um einen Laserstrahl auf ein Objekt zu senden, und einen Empfänger, der konfiguriert ist, um eine Reflexion des Laserstrahls am Objekt zu erkennen, wobei der LIDAR-Scanner konfiguriert ist, um Punktdaten basierend auf der Reflexion des Strahls zu erzeugen, wobei die Punktdaten der LIDAR-Punktwolke entsprechen.

3. Verfahren nach Anspruch 1 oder 2, wobei die Punktdaten für jeden einer Vielzahl von Punkten mindestens eines von Folgendem umfassen: Koordinaten, eine Rückmeldungsnummer, eine Anzahl von Rückmeldungen, eine Intensität und einen Scanwinkel.

4. Verfahren nach einem der Ansprüche 1 bis 3, wobei die panoptische Segmentierung ein neuronales Backbone-Netz beinhaltet, vorzugsweise wobei das neuronale Backbone-Netz unter Verwendung eines Datensatzes trainiert ist, der mit synthetischen Baumformationen ergänzt ist, die durch zufälliges Kombinieren und Anordnen von Ground-Truth-Bauminstanzen generiert werden, und/oder wobei das neuronale Backbone-Netz ein Point Transformer ist.

5. Verfahren nach einem der Ansprüche 1 bis 4, wobei die panoptische Segmentierung ohne ein Kronenhöhenmodell durchgeführt wird, wodurch die Abgrenzung von überwachsenen Bäumen ermöglicht wird.

6. Verfahren nach einem der Ansprüche 1 bis 5, ferner umfassend ein Erfassen von mindestens einem Luftbild des Zielgebiets.

7. Verfahren nach Anspruch 6, ferner umfassend ein Bestimmen einer Kronenklasse des jeweiligen Baums basierend auf der projizierten Baum-Punktwolke, wobei die Kronenklasse zu einer Menge möglicher Kronenklassen gehört, umfassend mindestens eine dominante Kronenklasse und eine überwachsene Kronenklasse, und als Reaktion darauf, dass die Kronenklasse einer dominanten Kronenklasse entspricht:
Generieren eines zugeschnittenen Bilds aus dem mindestens einen Luftbild des Zielgebiets basierend auf der projizierten Baum-Punktwolke;
Bereitstellen des zugeschnittenen Bilds als Eingang für einen zweiten Encoder, der darauf trainiert ist, als Eingang ein Baumbild zu akzeptieren und als Ausgang eine vektorielle Einbettung des Baumbilds zu generieren; und
Definieren des Klassifizierer-Eingangsvektors basierend auf einer Aggregation der vektoriellen Einbettung der Menge von LIDAR-Punkten, die dem einzelnen Baum und der vektoriellen Einbettung des Baumbilds entsprechen.

8. Verfahren nach Anspruch 7, wobei:
der erste Encoder und ein erster temporärer Klassifiziererblock, der den Ausgang des ersten Encoders als Eingang nimmt und eine vorhergesagte erste Art generiert, unter Verwendung eines ersten Datensatzes trainiert werden, umfassend Trainingssätze von LIDAR-Punkten, wobei jeder Trainingssatz von LIDAR-Punkten mit einer ersten Ground-Truth-Art gekennzeichnet ist, wobei der erste temporäre Klassifiziererblock nach dem Training verworfen wird,
der zweite Encoder und ein zweiter temporärer Klassifiziererblock, der den Ausgang des zweiten Encoders als Eingang nimmt und eine vorhergesagte zweite Art erzeugt, unter Verwendung eines zweiten Datensatzes trainiert werden, umfassend Luftbilder von Bäumen, wobei jedes Luftbild eines Baums mit einer zweiten Ground-Truth-Art gekennzeichnet wird, wobei der zweite temporäre Klassifiziererblock nach dem Training verworfen wird, und
der Klassifiziererblock unter Verwendung einer Schnittmenge des ersten Datensatzes und des zweiten Datensatzes trainiert wird.

9. System zum Generieren eines Bauminventars in einem Zielgebiet, das System umfassend:
mindestens ein Luftfahrzeug, das einen LIDAR-Scanner umfasst, der konfiguriert ist, um eine LIDAR-Punktwolke zu erfassen;
einen digitalen Geländemodell-Generator, der konfiguriert ist, um ein digitales Geländemodell basierend auf der LIDAR-Punktwolke zu generieren;
ein LIDAR-Daten-Segmentierungsmodul, das konfiguriert ist, um eine semantische Segmentierung durchzuführen, indem die LIDAR-Punktwolke in eine segmentierte LIDAR-Punktwolke segmentiert wird, wobei die segmentierte LIDAR-Punktwolke eine von einer Vielzahl von Klassen zu mindestens einer Teilmenge der LIDAR-Punkte der LIDAR-Punktwolke zuweist, die Klassen umfassend mindestens eine Vegetationsklasse;
ein panoptisches Segmentierungsmodul, das konfiguriert ist, um eine panoptische Segmentierung durchzuführen, durch:
Zuweisen einer von einer Vielzahl von panoptischen Segmentierungsklassen zu mindestens einer Teilmenge von panoptisch segmentierten LIDAR-Punkten der LIDAR-Punktwolke, die panoptischen Segmentierungsklassen umfassend mindestens eine Baumklasse und eine Niedervegetationsklasse, und
Zuweisen einer Instanzkennung zu jedem LIDAR-Punkt der LIDAR-Punktwolke der Baumklasse, wodurch eine Vielzahl von Bäumen abgegrenzt wird, wobei jeder Baum der Vielzahl von Bäumen mit einer jeweilige Baum-Punktwolke assoziiert ist, die einer Teilmenge der segmentierten LIDAR-Punktwolke entspricht;
ein Baum-Punktwolken-Verzerrer, der konfiguriert ist, für jeden jeweiligen Baum der Vielzahl von Bäumen die jeweilige Baum-Punktwolke auf das digitale Geländemodell zu projizieren; und
ein Artenklassifizierungsmodul, das konfiguriert ist, um das Bauminventar mit einer vorhergesagten Baumart zu aktualisieren, das Artenklassifizierungsmodul umfassend:
einen LIDAR-Encoder, der darauf trainiert ist, als Eingang eine Menge von LIDAR-Punkten, die einem einzelnen Baum entsprechen, zu akzeptieren und als Ausgang eine vektorielle Einbettung der Menge von LIDAR-Punkten, die dem einzelnen Baum entsprechen, zu generieren, und
einen Klassifizierer, der darauf trainiert ist, einen Klassifizierer-Eingangsvektor als Eingang zu akzeptieren und als Ausgang die vorhergesagte Baumart zu generieren, wobei der Klassifizierer-Eingangsvektor zumindest basierend auf der vektoriellen Einbettung der Menge von LIDAR-Punkten, die dem Einzelbaum entsprechen, definiert ist.

10. System nach Anspruch 9, wobei die Punktwolke für jeden von einer Vielzahl von Punkten mindestens eines von Folgenden umfasst: Koordinaten, eine Rückmeldungsnummer, eine Anzahl von Rückmeldungen, eine Intensität und einen Scanwinkel.

11. System nach Anspruch 9 oder 10, wobei das panoptische Segmentierungsmodul ein neuronales Backbone-Netz beinhaltet, vorzugsweise wobei das neuronale Backbone-Netz unter Verwendung eines Datensatzes trainiert ist, der mit synthetischen Baumformationen ergänzt ist, die durch zufälliges Kombinieren und Anordnen von Ground-Truth-Bauminstanzen generiert werden, und/oder wobei das neuronale Backbone-Netz ein Point Transformer ist.

12. System nach einem der Ansprüche 9 bis 11, wobei das panoptische Segmentierungsmodul konfiguriert ist, um panoptische Segmentierung ohne ein Kronenhöhenmodell durchzuführen, wodurch die Abgrenzung von überwachsenen Bäumen ermöglicht wird.

13. System nach einem der Ansprüche 9 bis 12, wobei jedes der mindestens einen Luftfahrzeuge ferner eine Kamera umfasst, die konfiguriert ist, um mindestens ein Luftbild des Zielgebiets zu erfassen.

14. System nach Anspruch 13, ferner umfassend:
einen Kronenklassifizierer, der konfiguriert ist, um für jeden jeweiligen Baum der Vielzahl von Bäumen eine Kronenklasse des jeweiligen Baums basierend auf der projizierten Baum-Punktwolke zu bestimmen, wobei die Kronenklasse zu einer Menge möglicher Kronenklassen gehört, umfassend mindestens eine dominante Kronenklasse und eine überwachsene Kronenklasse; und
einen Bildausschnittgenerator, der konfiguriert ist, um für jeden jeweiligen Baum der Vielzahl von Bäumen, der zu der dominanten Kronenklasse gehört, ein ausgeschnittenes Bild aus dem mindestens einen Luftbild des Zielgebiets basierend auf der projizierten Baum-Punktwolke zu generieren,
wobei das Artenklassifizierungsmodul ferner einen Bild-Encoder beinhaltet, der darauf trainiert ist, für jeden jeweiligen Baum der Vielzahl von Bäumen, der zu der dominanten Kronenklasse gehört, das ausgeschnittene Bild als Eingang zu akzeptieren und als Ausgang eine vektorielle Einbettung des Baumbildes zu generieren, und
wobei als Reaktion darauf, dass die Kronenklasse einer dominanten Kronenklasse entspricht, der Klassifizierer-Eingangsvektor basierend auf einer Aggregation der vektoriellen Einbettung der Menge von LIDAR-Punkten, die dem Einzelbaum entsprechen, und der vektoriellen Einbettung des Baumbilds definiert ist.

15. System nach Anspruch 14, wobei:
der erste Encoder und ein erster temporärer Klassifiziererblock, der den Ausgang des ersten Encoders als Eingang nimmt und eine vorhergesagte erste Art generiert, unter Verwendung eines ersten Datensatzes trainiert werden, der Trainingssätze von LIDAR-Punkten umfasst, wobei jeder Trainingssatz von LIDAR-Punkten mit einer ersten Ground-Truth-Art gekennzeichnet ist, wobei der erste temporäre Klassifiziererblock nach dem Training verworfen wird,
der zweite Encoder und ein zweiter temporärer Klassifiziererblock, der den Ausgang des zweiten Encoders als Eingang nimmt und eine vorhergesagte zweite Art generiert, unter Verwendung eines zweiten Datensatzes trainiert werden, umfassend Luftbilder von Bäumen, wobei jedes Luftbild von Bäumen mit einer zweiten Ground-Truth-Art gekennzeichnet ist, wobei der zweite temporäre Klassifiziererblock nach dem Training verworfen wird, und
der Klassifiziererblock unter Verwendung einer Schnittmenge des ersten Datensatzes und des zweiten Datensatzes trainiert wird.

## Revendications

1. Procédé de génération d'un inventaire d'arbres dans une zone cible, le procédé comprenant :
l'obtention d'un nuage de points LIDAR acquis par un scanneur LIDAR aéroporté ;
la génération d'un modèle numérique de terrain sur la base du nuage de points LIDAR ;
la réalisation d'une segmentation sémantique par segmentation du nuage de points LIDAR en un nuage de points LIDAR segmenté, le nuage de points LIDAR segmenté attribuant l'une d'une pluralité de classes à au moins un sous-ensemble de points LIDAR du nuage de points LIDAR, les classes comprenant au moins une classe de végétation ;
la réalisation d'une segmentation panoptique par segmentation du nuage de points LIDAR segmenté pour :
attribuer l'une d'une pluralité de classes de segmentation panoptique à au moins un sous-ensemble de points LIDAR segmentés panoptiques du nuage de points LIDAR, les classes de segmentation panoptique comprenant au moins une classe d'arbre et une classe de végétation basse, et
attribuer un identifiant d'instance à chaque point LIDAR du nuage de points LIDAR de la classe d'arbre, délimitant ainsi une pluralité d'arbres, chaque arbre de la pluralité d'arbres étant associé à un nuage de points d'arbre respectif correspondant à un sous-ensemble du nuage de points LIDAR segmenté ;
le remplissage de l'inventaire d'arbres avec la pluralité d'arbres ; et
pour chaque arbre respectif de la pluralité d'arbres :
la projection du nuage de points d'arbre respectif sur le modèle numérique de terrain,
la fourniture du nuage de points d'arbre projeté en entrée à un premier encodeur entraîné à accepter en entrée un ensemble de points LIDAR correspondant à un arbre unique et à générer en sortie une représentation vectorielle de l'ensemble de points LIDAR correspondant à l'arbre unique,
la définition d'un vecteur d'entrée de classificateur basé au moins sur la représentation vectorielle de l'ensemble de points LIDAR correspondant à l'arbre unique,
la fourniture du vecteur d'entrée de classificateur en entrée à un classificateur entraîné à accepter en entrée un vecteur et à générer en sortie une espèce d'arbre prédite, et
la mise à jour de l'inventaire d'arbres avec l'espèce d'arbre prédite.

2. Procédé selon la revendication 1, comprenant l'étape d'acquisition du nuage de points par un véhicule aérien équipé du scanneur LIDAR, le scanneur LIDAR comprenant au moins un émetteur configuré pour envoyer un faisceau laser vers un objet et un récepteur configuré pour détecter une réflexion du faisceau laser sur l'objet, le scanneur LIDAR étant configuré pour créer des données de points basées sur la réflexion du faisceau, les données de points correspondant au nuage de points LIDAR.

3. Procédé selon la revendication 1 ou 2, dans lequel les données de points comprennent, pour chacun d'une pluralité de points, au moins l'un des éléments suivants : des coordonnées, un numéro de retour, un nombre de retours, une intensité et un angle de balayage.

4. Procédé selon l'une quelconque des revendications 1 à 3, dans lequel la segmentation panoptique comprend un réseau de neurones dorsal, de préférence dans lequel le réseau de neurones dorsal est entraîné à l'aide d'un ensemble de données augmenté avec des formations d'arbres synthétiques générées par combinaison et agencement aléatoires d'instances d'arbres de vérité terrain et/ou dans lequel le réseau de neurones dorsal est un réseau Point Transformer.

5. Procédé selon l'une quelconque des revendications 1 à 4, dans lequel la segmentation panoptique est réalisée sans modèle de hauteur de canopée, permettant ainsi la délimitation d'arbres surplombés.

6. Procédé selon l'une quelconque des revendications 1 à 5, comprenant en outre l'obtention d'au moins une image aérienne de la zone cible.

7. Procédé selon la revendication 6, comprenant en outre la détermination d'une classe de cime de l'arbre respectif sur la base du nuage de points d'arbre projeté, la classe de cime appartenant à un ensemble de classes de cime possibles comprenant au moins une classe de cime dominante et une classe de cime dominée et, en réponse à la classe de cime correspondant à une classe de cime dominante :
la génération d'une image recadrée à partir de l'au moins une image aérienne de la zone cible sur la base du nuage de points d'arbre projeté ;
la fourniture de l'image recadrée en entrée à un deuxième encodeur entraîné à accepter en entrée une image d'arbre et à générer en sortie une représentation vectorielle de l'image d'arbre ; et
la définition du vecteur d'entrée de classificateur sur la base d'une agrégation de la représentation vectorielle de l'ensemble de points LIDAR correspondant à l'arbre unique et de la représentation vectorielle de l'image d'arbre.

8. Procédé selon la revendication 7, dans lequel :
le premier encodeur et un premier bloc de classificateur temporaire prenant la sortie du premier encodeur en entrée et générant une première espèce prédite sont entraînés à l'aide d'un premier ensemble de données comprenant des ensembles d'entraînement de points LIDAR, chaque ensemble d'entraînement de points LIDAR étant étiqueté avec une première espèce de vérité terrain, le premier bloc de classificateur temporaire étant supprimé après l'entraînement,
le deuxième encodeur et un deuxième bloc de classificateur temporaire prenant la sortie du deuxième encodeur en entrée et générant une deuxième espèce prédite sont entraînés à l'aide d'un deuxième ensemble de données comprenant des images aériennes d'arbres, chaque image aérienne d'arbre étant étiquetée avec une deuxième espèce de vérité terrain, le deuxième bloc de classificateur temporaire étant supprimé après l'entraînement, et
le bloc de classificateur est entraîné à l'aide d'une intersection du premier ensemble de données et du deuxième ensemble de données.

9. Système pour générer un inventaire d'arbres dans une zone cible, le système comprenant :
au moins un véhicule aérien comprenant un scanneur LIDAR configuré pour acquérir un nuage de points LIDAR ;
un générateur de modèle numérique de terrain configuré pour générer un modèle numérique de terrain sur la base du nuage de points LIDAR ;
un module de segmentation de données LIDAR configuré pour effectuer une segmentation sémantique par segmentation du nuage de points LIDAR en un nuage de points LIDAR segmenté, le nuage de points LIDAR segmenté attribuant l'une d'une pluralité de classes à au moins un sous-ensemble de points LIDAR du nuage de points LIDAR, les classes comprenant au moins une classe de végétation ;
un module de segmentation panoptique configuré pour effectuer une segmentation panoptique en :
attribuant l'une d'une pluralité de classes de segmentation panoptique à au moins un sous-ensemble de points LIDAR segmentés panoptiques du nuage de points LIDAR, les classes de segmentation panoptique comprenant au moins une classe d'arbre et une classe de végétation basse, et
attribuant un identifiant d'instance à chaque point LIDAR du nuage de points LIDAR de la classe d'arbre, délimitant ainsi une pluralité d'arbres, chaque arbre de la pluralité d'arbres étant associé à un nuage de points d'arbre respectif correspondant à un sous-ensemble du nuage de points LIDAR segmenté ;
un déformateur de nuage de points d'arbre configuré, pour chaque arbre respectif de la pluralité d'arbres, pour projeter le nuage de points d'arbre respectif sur le modèle numérique de terrain ; et
un module de classification d'espèces configuré pour mettre à jour l'inventaire d'arbres avec une espèce d'arbre prédite, le module de classification d'espèces comprenant :
un encodeur LIDAR entraîné, pour chaque arbre unique respectif de la pluralité d'arbres, à accepter en entrée le nuage de points d'arbre projeté et à générer en sortie une représentation vectorielle de l'ensemble de points LIDAR correspondant à l'arbre unique, et
un classificateur entraîné à accepter en entrée un vecteur d'entrée de classificateur et à générer en sortie l'espèce d'arbre prédite, le vecteur d'entrée du classificateur étant défini au moins sur la base de la représentation vectorielle de l'ensemble de points LIDAR correspondant à l'arbre unique.

10. Système selon la revendication 9, dans lequel le nuage de points comprend, pour chacun d'une pluralité de points, au moins l'un des éléments suivants : des coordonnées, un numéro de retour, un nombre de retours, une intensité et un angle de balayage.

11. Système selon la revendication 9 ou 10, dans lequel le module de segmentation panoptique comprend un réseau de neurones dorsal, de préférence dans lequel le réseau de neurones dorsal est entraîné à l'aide d'un ensemble de données augmenté avec des formations d'arbres synthétiques générées par combinaison et agencement aléatoires d'instances d'arbres de vérité terrain et/ou dans lequel le réseau de neurones dorsal est un réseau Point Transformer.

12. Système selon l'une quelconque des revendications 9 à 11, dans lequel le module de segmentation panoptique est configuré pour effectuer une segmentation panoptique sans modèle de hauteur de canopée, permettant ainsi la délimitation d'arbres surplombés.

13. Système selon l'une quelconque des revendications 9 à 12, dans lequel chacun de l'au moins un véhicule aérien comprend en outre une caméra configurée pour acquérir au moins une image aérienne de la zone cible.

14. Système selon la revendication 13, comprenant en outre :
un classificateur de cime configuré, pour chaque arbre respectif de la pluralité d'arbres, pour déterminer une classe de cime de l'arbre respectif sur la base du nuage de points d'arbre projeté, la classe de cime appartenant à un ensemble de classes de cime possibles comprenant au moins une classe de cime dominante et une classe de cime dominée ; et
un recadreur d'image configuré, pour chaque arbre respectif de la pluralité d'arbres appartenant à la classe de cime dominante, pour générer une image recadrée à partir de l'au moins une image aérienne de la zone cible sur la base du nuage de points d'arbre projeté,
dans lequel le module de classification d'espèces comprend en outre un encodeur d'image entraîné, pour chaque arbre respectif de la pluralité d'arbres appartenant à la classe de cime dominante, à accepter l'image recadrée en entrée et à générer en sortie une représentation vectorielle de l'image d'arbre, et
dans lequel, en réponse à la classe de cime correspondant à une classe de cime dominante, le vecteur d'entrée du classificateur est défini sur la base d'une agrégation de la représentation vectorielle de l'ensemble de points LIDAR correspondant à l'arbre unique et de la représentation vectorielle de l'image d'arbre.

15. Système selon la revendication 14, dans lequel :
le premier encodeur et un premier bloc de classificateur temporaire prenant la sortie du premier encodeur en entrée et générant une première espèce prédite sont entraînés à l'aide d'un premier ensemble de données comprenant des ensembles d'entraînement de points LIDAR, chaque ensemble d'entraînement de points LIDAR étant étiqueté avec une première espèce de vérité terrain, le premier bloc de classificateur temporaire étant écarté après l'entraînement,
le deuxième encodeur et un deuxième bloc de classificateur temporaire prenant la sortie du deuxième encodeur en entrée et générant une deuxième espèce prédite sont entraînés à l'aide d'un deuxième ensemble de données comprenant des images aériennes d'arbres, chaque image aérienne d'arbre étant étiquetée avec une deuxième espèce de vérité terrain, le deuxième bloc de classificateur temporaire étant écarté après l'entraînement, et
le bloc de classificateur est entraîné à l'aide d'une intersection du premier ensemble de données et du deuxième ensemble de données.
